# EUROPEAN PATENT APPLICATION

(11) **EP 1 857 921 A2**
(43) Date of publication of application: **21.11.2007**
(21) Application number: 07251954.9
(22) Date of filing: 11.05.2007
(51) Int. Cl.: G06F 3/12

(54) **Managing recording sheet type information**

(30) Priority: 12.05.2006 JP 2006134103; 16.06.2006 JP 2006166927; 28.02.2007 JP 2007048348
(71) Applicant: Ricoh Company, Ltd., Tokyo 143-8555 (JP)
(72) Inventor: Saito, Kazuma, Tokyo 143-8555 (JP); Tamura, Noboru, Tokyo 143-8555 (JP); Yanamura, Yasuharu, Tokyo 143-8555 (JP); Takahira, Tomoyuki, Tokyo 143-8555 (JP)
(74) Representative: Leeming, John Gerard

(57) **Abstract**

Example embodiments of the present invention relate generally to an apparatus, method, system, computer program and product, each capable of managing information regarding a plurality of recording sheet types available for use by an image forming apparatus. The image forming apparatus is connectable to an information processing apparatus, and manages a custom sheet type table storing a custom sheet type identification number, a custom sheet type name, and custom sheet type information in a corresponding manner for a custom sheet type registered by a user. The image forming apparatus may further manage a default sheet type table storing a default sheet type identification number and default sheet type information in a corresponding manner for a default sheet type previously set by default.

## Description

Example embodiments of the present invention relate generally to an apparatus, method, system, computer program and product, each capable of managing information regarding a plurality of recording sheet types available for use by an image forming apparatus.

When printing image data using an image forming apparatus, a user may instruct the image forming apparatus to form an image of the image data on a custom type recording sheet in alternative to a default type recording sheet. For example, as described in the Japanese Patent Application Publication No. 2002-29120, the image forming apparatus may be previously provided with a sheet type table, which stores various kinds of information regarding the default type recording sheet. Additionally, the user may register a custom type recording sheet by causing the image forming apparatus to store various kinds of information regarding the custom type recording sheet in the sheet type table. In this manner, the image forming apparatus becomes capable of printing the image data on the custom type recording sheet.

On the other hand, an image forming apparatus including the above-described image forming apparatus is usually accessed by a plurality of information processing apparatuses through a network. The custom type recording sheet may be registered through any one of the plurality of information processing apparatuses at any time such that the sheet type table may be frequently updated. Thus, each one of the plurality of information processing apparatuses needs to obtain various kinds of information stored in the sheet type table every time the sheet type table is updated to notify the user of the custom type recording sheet available for use. This may result in increased time for generating or processing a printing job request, or increased work load of the image forming apparatus or the information processing apparatus.

Further, a wide variety of image forming apparatuses may exist on the network such that it may be difficult for the user to keep track of one or more functions available for use by each image forming apparatus. For example, one image forming apparatus may be provided with a stapler, while the other image forming apparatus may be provided with a puncher. If the user desires to punch a recording sheet after forming the image on the recording sheet, the user, or the information processing apparatus provided at the user site, needs to know which one of the image forming apparatuses to use before generating a printing job request. Further, it may be necessary to check whether the function specified by the printing job matches the function avilable to the image forming apparatus receiving the printing job request. This may result in increased time for generating or processing the printing job request, or increased work load of the image forming apparatus or the information processing apparatus.

In light of the above-described and other problems, there is a need for managing information regarding a plurality of recording sheet types available for use by an image forming apparatus while suppressing the time for generating or processing a printing job request, or the work load of the image forming apparatus or the information processing apparatus.

Additionally or alternatively, there is a need for managing information regarding a plurality of functions avilable for use by an image forming apparatus, while suppressing the time for generating or processing the printing job request, or the work load of the image forming apparatus or the information processing apparatus.

An example embodiment of the present invention includes an image forming apparatus connectable to an information processing apparatus, which manages a custom sheet type table storing a custom sheet type identification number, a custom sheet type name, and custom sheet type information in a corresponding manner for a custom sheet type registered by a user. The image forming apparatus may further manage a default sheet type table storing a default sheet type identification number and default sheet type information in a corresponding manner for a default sheet type previously set by default.

In one example, the image forming apparatus outputs the custom sheet type name of the custom sheet type for display to the user upon receiving a sheet type name request from the user.

In another example, when the image forming apparatus receives a printing job request that requests the image forming apparatus to perform a printing job, which includes identification information of a selected sheet type selected by the user for processing the printing job, the image forming apparatus may convert the identification information of the selected sheet type to a sheet type identification number using a selected one of the custom sheet type table and the default sheet type table, and rewrite the printing job request by replacing the identification information with the sheet type identification number. The image forming apparatus may further perform the printing job, using information obtained from the selected one of the custom sheet type table and the default sheet type table.

In another example, when the image forming apparatus receives a printing job storage request that requests the image forming apparatus to store a printing job, which includes identification information of a selected sheet type selected by the user for processing the printing job, the image forming apparatus may convert the identification information of the selected sheet type to a sheet type identification number using a selected one of the custom sheet type table and the default sheet type table, and rewrite the printing job storage request by replacing the identification information with the sheet type identification number. The image forming apparatus may further store the printing job as a stored printing job. At this time, the custom sheet type table obtained when the printing job storage request is received may be additionally stored as a stored custom sheet type table, in a corresponding manner with the stored printing job.

In another example, when the image forming apparatus receives a printing job request that requests the image forming apparatus to perform a printing job, the image forming apparatus may determine whether the printing job requested by the printing job request corresponds to the stored printing job to generate a determination result. Based on the determination result, the printing job may be performed differently.

In another example, when the image forming apparatus receives a printing job request that requests the image forming apparatus to perform a printing job, the image forming apparatus may compare between the custom sheet type table obtained when the printing job request is received and the stored custom sheet type table to generate a comparison result. Based on the comparison result, the printing job may be performed differently or may not be performed.

An example embodiment of the present invention includes an information processing apparatus connectable to an image forming apparatus, which sends a sheet type name request to the image forming apparatus and receive identification information of a recording sheet type avilable for use by the image forming apparatus in response to the sheet type name request. The information processing apparatus may further determine whether the identification information is stored in the information processing apparatus to generate a determination result, and set the identification information for display when the determination result indicates that the identification information is not stored.

An example embodiment of the present invention includes an image forming system, which includes any one of the above-described and other image forming apparatuses and any one of the above-described and other information processing apparatuses, without departing from the spirit and scope of the present invention.

In addition to the above-described examples, the present invention may be implemented in various other ways, for example, as a method of managing a recording sheet type, or a computer program product causing any general-purpose computer to function as any one of the above-described and other image forming apparatuses or information processing apparatuses.

A more complete appreciation of the disclosure and many of the attendant advantages thereof will be readily obtained as the same becomes better understood by reference to the following detailed description when considered in connection with the accompanying drawings, wherein:
FIG 1 is a schematic block diagram illustrating a structure of a printing system, according to an example embodiment of the present invention;
FIG 2 is a schematic block diagram illustrating a hardware structure of a printer shown in FIG. 1, according to an example embodiment of the present invention;
FIG. 3 is a schematic block diagram illustrating a hardware structure of the printer shown in FIG. 1, according to an example embodiment of the present invention;
FIG 4 is a schematic block diagram illustrating a functional structure of a selected portion of the printer shown in FIG 1, according to an example embodiment of the present invention;
FIG 5 is a schematic block diagram illustrating a hardware structure of a personal computer (PC) shown in FIG 1, according to an example embodiment of the present invention;
FIG 6 is a schematic block diagram illustrating a functional structure of a selected portion of the PC shown in FIG 1, according to an example embodiment of the present invention;
FIG 7 is an example default sheet type table storing information regarding a plurality of default recording sheet types managed by the printer shown in FIG 1;
FIG 8 is an example custom sheet type table storing information regarding a plurality of custom recording sheet types managed by the printer shown in FIG 1;
FIG 9 is an example authorized user table storing information regarding an authorized user for at least one of the plurality of recording sheet types shown in FIGS. 7 and 8;
FIG 10 is a sequence diagram illustrating operation of registering a custom recording sheet type, performed by the printing system shown in FIG 1, according to an example embodiment of the present invention;
FIG. 11 is an example registration screen displayed by the printer shown in FIG 1, when operation of registering a custom recording sheet type is performed;
FIG. 12A is an example registration screen displayed by the PC shown in FIG. 1, when operation of registering a custom recording sheet type is performed;
FIG 12B is an example registration screen displayed by the PC shown in FIG 1, when operation of registering a custom recording sheet type is performed;
FIG. 12C is an example registration screen displayed by the PC shown in FIG. 1, when operation of registering a custom recording sheet type is performed;
FIG 13 is a sequence diagram illustrating operation of displaying a plurality of sheet type names, performed by the printing system shown in FIG 1, according to an example embodiment of the present invention;
FIG. 14 is an example printing setting screen displayed by the PC shown in FIG 1;
FIG 15 is a sequence diagram illustrating operation of displaying a plurality of sheet type names, performed by the printer shown in FIG. 1, according to an example embodiment of the present invention;
FIG. 16 is an example printing waiting screen displayed by the printer shown in FIG.1;
FIG. 17 is an example tray table managed by the printer shown in FIG. 1;
FIG. 18 is an example conversion table storing a plurality of default sheet type identification numbers and a plurality of default sheet type names in a corresponding manner;
FIG 19 is a flowchart illustrating operation of displaying a plurality of sheet type names, performed by a panel controller shown in FIG. 4, according to an example embodiment of the present invention;
FIG. 20A is a sequence diagram illustrating operation of processing a current printing job request sent by the PC shown in FIG. 1, performed by the printer shown in FIG. 1, according to an example embodiment of the present invention;
FIG. 20B is a sequence diagram illustrating operation of processing a current printing job request sent by the PC shown in FIG. 1, performed by the printer shown in FIG 1, according to an example embodiment of the present invention;
FIG. 21 is an example conversion table storing a plurality of default sheet type codes and a plurality of default sheet type names in a corresponding manner;
FIG. 22 is an example conversion table storing a plurality of default sheet type identification numbers and a plurality of default sheet type codes in a corresponding manner;
FIG 23 is a flowchart illustrating operation of processing a current printing job request sent by the PC shown in FIG. 1, performed by a job manager shown in FIG. 4, according to an example embodiment of the present invention;
FIG. 24 is a flowchart illustrating operation of performing a printing job, performed by a printer controller shown in FIG 4, according to an example embodiment of the present invention;
FIG 25 is a flowchart illustrating operation of setting a plurality of sheet type names for display, performed by the PC shown in FIG 1, according to an example embodiment of the present invention;
FIG 26 is a schematic block diagram illustrating a hardware structure of the printer shown in FIG. 1, according to an example embodiment of the present invention;
FIG 27 is a schematic block diagram illustrating a functional structure of a selected portion of the printer shown in FIG. 1, according to an example embodiment of the present invention;
FIG. 28 is a sequence diagram illustrating operation of processing a printing job storage request, performed by the printer shown in FIG 1, according to an example embodiment of the present invention;
FIG 29 is a sequence diagram illustrating operation of processing a stored printing job request, performed by the printer shown in FIG 1, according to an example embodiment of the present invention;
FIG. 30A is an example custom sheet type table stored in a corresponding manner with a printing job when the printing job is stored;
FIG. 30B is an example custom sheet type table obtained when a printing job being stored is performed;
FIG 31 is a flowchart illustrating operation of processing a printing job request, performed by a job manager shown in FIG 27, according to an example embodiment of the present invention;
FIG 32 is a flowchart illustrating operation of processing a printing job request, performed by the job manager shown in FIG. 27, according to an example embodiment of the present invention;
FIG. 33 is a flowchart illustrating operation of performing a printing job, performed by a printer controller shown in FIG 27, according to an example - embodiment of the present invention;
FIG. 34 is a flowchart illustrating operation of processing a printing job request, performed by the job manager shown in FIG. 27, according to an example embodiment of the present invention; and
FIG 35 is an example table storing information indicating one or more custom sheet types set for one or more printing jobs.

In describing the example embodiments illustrated in the drawings, specific terminology is employed for clarity. However, the disclosure of this patent specification is not intended to be limited to the specific terminology selected and it is to be understood that each specific element includes all technical equivalents that operate in a similar manner. For example, the singular sheets "a", "an" and "the" are intended to include the plural forms as well, unless the context clearly indicates otherwise.

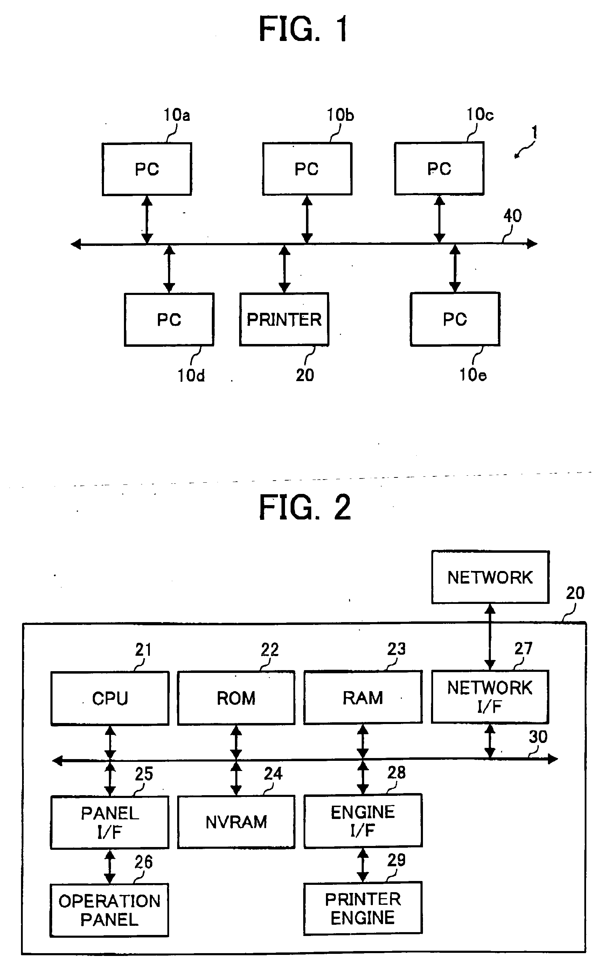

Referring now to the drawings, wherein like reference numerals designate identical or corresponding parts throughout the several views, FIG. 1 illustrates a printing system 1 according to an example embodiment of the present invention. The printing system 1 includes first, second, third, fourth, and fifth personal computers 10a, 10b, 10c, 10d, and 10e (collectively referred to as the "PC" 10), and a printer 20, which are connected via a network 40. In this example, the network 40 may be implemented by a local area network (LAN) or the Internet.

The printing system 1 of FIG 1 is capable of managing various information regarding a plurality of recording sheet types available for use by the printer 20. For example, such information regarding the plurality of recording sheet types may include identification information uniquely assigned to each one of the plurality of recording sheet types, such as a sheet type identification number, a sheet type code, and/or a sheet type name. The information regarding the plurality of recording sheet types may further include sheet type information uniquely set for each one of the plurality of recording sheet types, for example, including information indicating whether the recording sheet type is a default recording sheet type previously set by default or a custom recording sheet type registered by the user as described below. Further, the sheet type information may include information regarding the physical characteristics of the recording sheet, such as the material of the recording sheet indicating whether the recording sheet is normal or plain paper, recycled paper, OHP (over head projector) sheet, index sheet, special paper, coated sheet, etc., or the thickness of the recording sheet. Further, the sheet type information may include information regarding printing control parameters suitable for a specific recording sheet type. Further, the sheet type information may include information regarding one or more functions that may be optionally used by the printer 20 when using a specific recording sheet type for printing. Further, the sheet type information may include information regarding one or more users who are authorized to use a specific recording sheet type.

In one example, the PC 10 generates a request for starting a registration operation of registering one or more custom sheet types ("the registration start request"), and sends the registration start request to the printer 20. Upon receiving the registration start request, the printer 20 displays a registration screen to the PC 10, and requests the PC 10 to send information regarding one or more custom recording sheet types to be registered. The information regarding one or more custom recording sheet types may include identification information such as the custom sheet type name, and a selected item of sheet type information such as the physical characteristics information. The printer 20 registers one or more custom sheet types, by storing the information regarding one or more custom sheet types received from the PC 10 in a form manageable by the printer 20, such as a custom sheet type table. After registering one or more custom sheet types, the PC 10 may instruct the printer 20 to change the information being stored for any one of the registered custom sheet types. Alternatively, the printer 20 may register one or more custom recording sheet types according to a user instruction input directly to the printer 20.

In another example, the PC 10 generates a request for obtaining sheet type names assigned to one or more sheet types available for use by the printer 20 ("the sheet type name request"), and sends the sheet type name request to the printer 20. Upon receiving the sheet type name request, the printer 20 sends the sheet type names of the sheet types to the PC 10. Once the sheet type names are received from the printer 20, the PC 10 may display the sheet type names to the user. Alternatively, the printer 20 may display the sheet type names of the sheet types avilable for use by the printer 20 on a display device provided with the printer 20.

In another example, the PC 10 generates a request for storing a printing job ("the printing job storage request"), and sends the printing job storage request to the printer 20. In this example, the printing job storage request may include information indicating the time when the printing job is requested, information regarding image data to be printed, and various printing setting information to be used for processing the printing job, etc. The printing setting information may include identification information, such as a sheet type name or a sheet type code, of a selected sheet type to be used for printing, information regarding the size of the recording sheet, information regarding a function of the printer 20 optionally used or prohibited from using, and/or information regarding one or more users who are authorized to use the sheet type. Upon receiving the printing job storage request, the printer 20 may convert the sheet type name or the sheet type code to a corresponding sheet type identification number, and replaces the identification information included in the printing job with the obtained sheet type identification number. The printer 20 may further obtain a selected portion or the entire portion of the custom sheet type table, as a stored custom sheet type table that indicates the custom sheet type information when the printing job storage request is received. The printer 20 may store the printing job and the stored custom sheet type table in a corresponding manner.

In another example, the PC 10 generates a request for performing a printing job ("the printing job request"), and sends the printing job request to the printer 20. In this example, the printing job request may include information regarding the time when the printing job is requested, information regarding image data to be printed, various printing setting information set for processing the printing job, etc. The printing setting information may include identification information, such as the sheet type name or the sheet type code, of a selected sheet to be used for printing, information regarding the size of the recording sheet, information regarding a function of the printer 20 optionally used or prohibited from using, and/or information regarding one or more users who are authorized to use the sheet type. Upon receiving the printing job request, the printer 20 may form a toner image of the image data specified by the printing job according to printing control parameters that are suitable to the selected sheet type.

The printing control parameters may be obtained from either one of stored custom sheet type table previously stored in a corresponding manner with the selected sheet type, and the most updated custom sheet type table currently stored in a corresponding manner with the selected sheet type. In one example, when the requested printing job corresponds to a stored printing job, the printing control parameters may be obtained from the stored custom sheet type table. When the requested printing job corresponds to a current printing job, the printing control parameters may be obtained from the updated or current custom sheet type table. In another example, when the entire or a selected portion of information stored in the custom sheet type tables is different between the stored custom sheet type table and the current custom sheet type table, the printing control parameters may be obtained from the stored custom sheet type table. When the entire or a selected portion of information stored in the custom sheet type tables is the same, the printing control parameters may be obtained from the current custom sheet type table. In another example, whether to use the stored custom sheet type table or the current custom sheet type table may be determined according to the user preference.

In addition to the above-described functions or operations, the printing system 1 is capable of performing various other functions or operations as described below.

Referring now to FIG. 2, an example hardware structure of the printer 20 is explained. The printer 20 of FIG. 2 includes a central processing unit (CPU) 21, a read only memory (ROM) 22, a random access memory (RAM) 23, a non-volatile RAM (NVRAM) 24, a panel interface (I/F) 25, a network 1/F 27, and an engine I/F 28, which are connected via a system bus 30. The printer 20 further includes an operation panel 26 connected to the panel I/F 25, and a printer engine 29 connected to the engine I/F 28. The printer 20 may further include a hard disk drive (HDD), which may be optionally provided.

The CPU 21 may function as a system controller capable of controlling the printer 20 using various programs stored in any desired memory or storage device, such as the ROM 22 or the NVRAM 24. The ROM 22, which may be implemented by a non-volatile memory, may store various data including, for example, various programs to be executed by the CPU 21, various parameters, etc. Alternatively, the ROM 22 may be replaced by a rewritable memory such that any data stored in the ROM 22 may be updated. The RAM 23 may temporarily store various data such that it may function as a work memory of the CPU 21. The NVRAM 24 may be implemented by a rewritable memory, which may store various programs to be executed by the CPU 21, various parameters to be kept after turning off of the printer 20 for later use, etc.

The panel I/F 25 may be implemented by any desired interface, which connects the operation panel 26 with the system bus 30 to allow data transfer between the CPU 21 and the operation panel 26. Through the panel I/F 25, the CPU 21 may send data to be output through the operation panel 26, or receive data input through the operation panel 26. The operation panel 26 may include a display device such as a liquid crystal display (LCD) or a light emitting diode (LED). The operation panel 26 may additionally include an input device including various keys or buttons, and/or a touch panel that may be provided on the LCD. For example, the CPU 21 may cause the display device of the operation panel 26 to provide a graphical user interface (GUI) to display various kinds of screen. The CPU 21 may cause the input device of the operation panel 26 to input information received from the user including, for example, a request for performing a specific operation.

The network I/F 27 may be implemented by any desired interface, which allows communication between the printer 20 and an external apparatus such as the PC 10 via the network 40. In this example, the network I/F 27 may establish communication based on the Ethernet technology. The engine I/F 28 connects the printer engine 29 with the system bus 30 to allow data transfer between the CPU 21 and the printer engine 29.

Under control of he CPU 21, the printer engine 29 may cause the printer 20 to form a toner image of image data on a recording sheet, according to a printing job request received from the user, using one or more image forming devices.

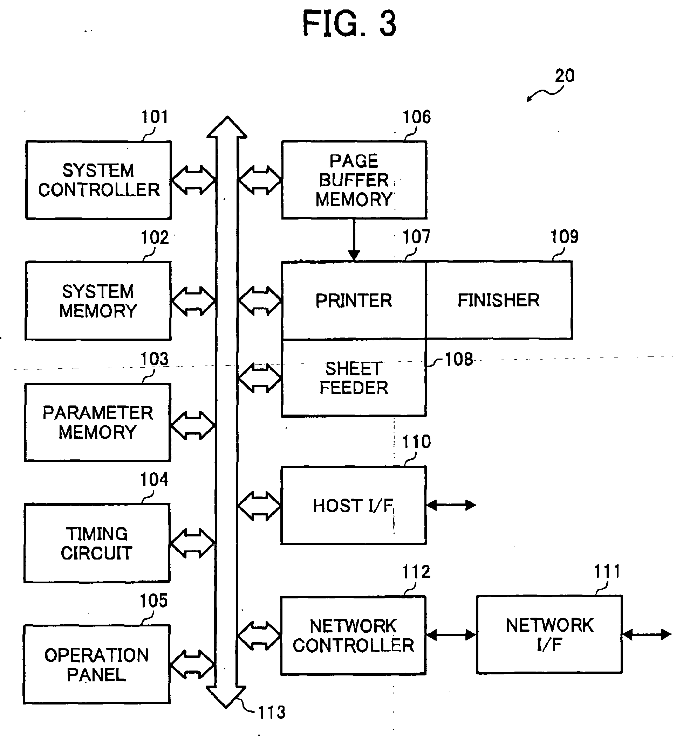

Referring now to FIG 3, an example hardware structure of the printer 20 is explained. The printer 20 of FIG. 3 includes a system controller 101, a system memory 102, a parameter memory 103, a timing circuit 104, an operation panel 105, a page buffer memory 106, a printer 107, a sheet feeder 108, a finisher 109, a host I/F 110, a network I/F 111, and a network controller 112, which are connected via an internal bus 113.

The system controller 101 may control operation of the printer 20, including operation of feeding a recording sheet, operation of forming an image on the recording sheet, communicating with a host apparatus such as the PC 10 of FIG 1 through the host I/F 110, communicating with the user through the operation panel 105, communicating with the external apparatus such as the PC 10 through the network I/F 111, or managing information regarding one or more recording sheet types avilable for use by the printer 20.

The system memory 102 may store various programs to be executed by the system controller 101. The system memory 102 may additionally function as a work memory of the system controller 101. The parameter memory 103 may store various data that may be used by the printer 20, such as various parameters. The timing circuit 104 may output time information indicating the current time. The operation panel 105 allows the user to communicate with the printer 20.

The page buffer memory 106, which may function as a flame memory, may store image data to be printed, page by page. The printer 107 reads out the image data from the page buffer memory 6, and forms an image according to the image data on the recording sheet fed by the sheet feeder 108. The sheet feeder 108 may include a plurality of trays each storing a stack of recording sheets of specific type. The finisher 109 may include a rotator that changes the orientation of the recording sheet, a stapler that staples more than one recording sheet, and/or a punch that punches a recording sheet.

The host I/F 110, which may be implemented by a communication device such as a universal serial bus (USB), connects the printer 20 to the host apparatus such as the PC 10 to allow data transfer between the printer 20 and the host apparatus via the LAN.

The network I/F 111 connects the printer 20 to the network 40 and further to the external apparatus such as the PC 10 provided on the network 40. The network controller 112 may control data transfer between the printer 20 and the external apparatus, for example, by specifying a communication protocol.

The hardware structure of the printer 20 may be implemented in various ways other than the structure shown in FIG. 2 or 3.

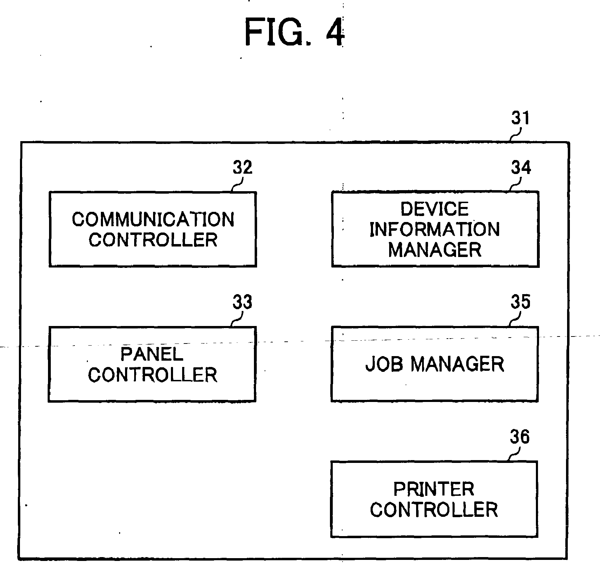

Referring now to FIG. 4, an example functional structure of the printer 20 is explained. Specifically, in this example, the printer 20 performs image forming upon receiving the printing job request from the PC 10 or directly from the user through the operational panel. For example, the CPU 21 of FIG. 2 or the system controller 101 of FIG 3 executes a print control program, such as a printer driver, to cause the printer 20 to function as a controller 31 shown in FIG. 4. The controller 31 of FIG. 4 includes a communication controller 32, a panel controller 33, a device information manager 34, a job manager 35, and a printer controller 36.

The communication controller 32 controls communication between the printer 20 and the external apparatus such as the PC 10 through the network 40. For example, the communication controller 32 may receive a registration start request, a sheet type name request, a printing job storage request, or a printing job request, from the PC 10 through the network I/F 27 (FIG. 2) or the network I/F 111 (FIG. 3). In another example, the communication controller 32 may send the sheet type names of a plurality of sheet types avilable for use by the printer 20, to the PC 10 in response to the sheet type name request. In another example, the communication controller 32 may send an error notice to the PC 10, when an error is detected in processing the printing job request or the printing job storage request.

The panel controller 33 controls operation of the operation panel 26 (FIG. 2) or the operation panel 105 (FIG 3). In one example, the panel controller 33 causes the operation panel to display various information including information regarding one or more sheet types, to the user. In another example, the panel controller 33 receives various information input by the user through the operation panel, such as printing setting information to be used for printing.

In this example, the communication controller 32 and the panel controller 33 may collectively referred to as a user interface (UI) controller.

The device information manager 34 manages various information to be used by the printer 20, including information regarding one or more sheet types avilable for use by the printer 20.

The job manager 35 manages a printing job, which may be requested by the PC 10 through a printing job request.

The printer controller 36 controls image forming operation, for example, through the printer engine 29 (FIG. 2), or one or more image forming devices such as the printer 107, the sheet feeder 108, and the finisher 109 (FIG 3). For example, the printer controller 36 may instruct the printer engine 29 or the image forming devices to perform the printing job using printing control parameters, which may be obtained in a corresponding manner with the sheet type specified by the printing job.

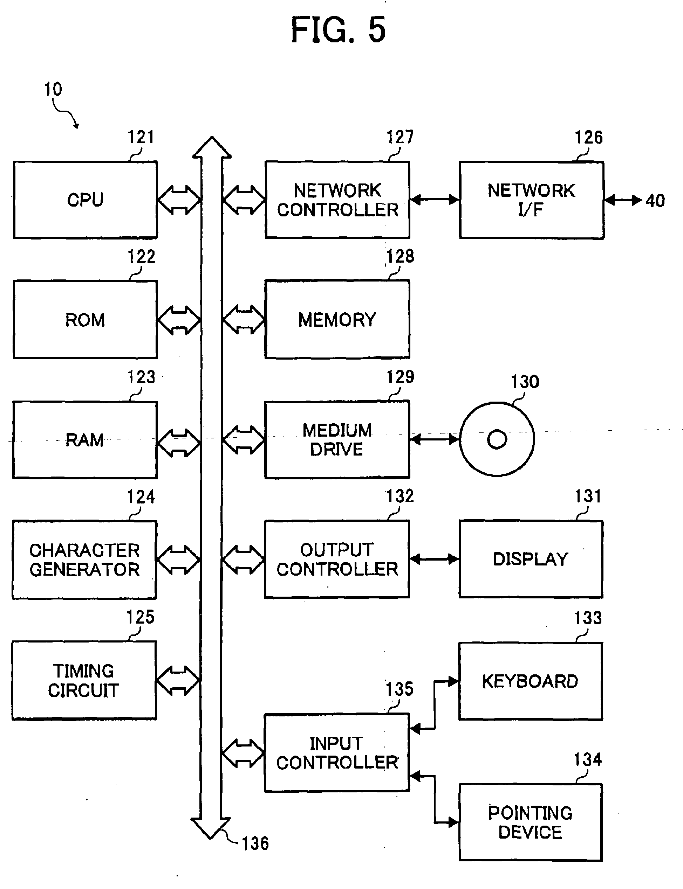

The PC 10 may be implemented by a general-purpose computer, which may include a processor such as a CPU, and a memory such as a ROM, RAM, and/or HDD, for example, as illustrated in FIG. 5. The PC 10 of FIG. 5 includes a CPU 121, a ROM 122, a RAM 123, a character generator 124, a timing circuit 125, a network I/F 126, a network controller 127, a memory 128, a medium drive 129, an output controller 132, and an input controller 135, which are connected via an internal bus 136.

The CPU 121 controls operation of the PC 10. The ROM 122 may store various data including various programs to be executed by the CPU 121. The RAM 123 may function as a work area of the CPU 121.

The character generator 124 generates graphical data for display. The timing circuit 125 generates time information regarding the current time. The network I/F 126 connects the PC 10 with the network, such as the LAN. The network controller 127 controls data transfer between the PC 10 and the external apparatus such as the printer 20 via the network 40, for example, by specifying a communication protocol.

The memory 128, which may be implemented by a magnetic disk device, may store various data, including various application programs, work data, file data, image data, etc. The medium drive 129 may read or write data from or onto a recording medium 30, which is removable. Examples of the recording medium 30 may include any desired optical disc such as a DVD, CD-ROM, or CD-R. The output controller 132 controls data to be output, for example, data to be displayed on a display device 131. The display device 131, which is connected to the PC 10, may be implemented by, for example, an LCD.

The input controller 135 may input various information provided by the user through a keyboard 33 or a pointing device 134. The keyboard 33, or the pointing device 134 such as a mouse, are each connected to the PC 10.

The hardware structure of the PC 10 may be implemented in various ways other than the structure shown in FIG. 5.

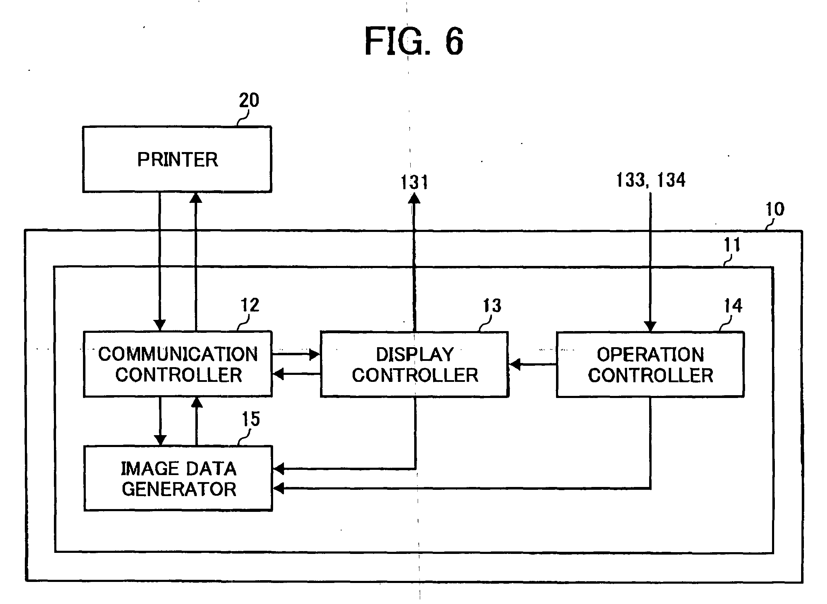

Referring now to FIG. 6, an example functional structure of the PC 10 is explained. Specifically, in this example, the PC 10 performs printer control operation according to a user instruction or upon execution of the corresponding application program. For example, the CPU 121 of FIG 5 executes a printer control program, such as a printer driver, to cause the PC 10 to function as a controller 11 shown in FIG 6. The controller 11 of FIG. 6 includes a communication controller 12, a display controller 13, a operation controller 14, and an image data generator 15.

The communication controller 12 controls communication between the PC 10 and the external apparatus such as the printer 20. In one example, the communication controller 12 may send data, such as the printing job request or the sheet type name request, to the printer 20. In another example, the communication controller 12 may receive data, such as the print result in response to the printing job request, or the names of one or more sheet types avilable for use by the printer 20 in response to the sheet type name request.

The display controller 13 controls data to be displayed on the display device 131, for example, in the form of GUI. The data for display may be generated according to information received from the printer 20 through the communication controller 12. For example, the display controller 13 may display a list of the sheet type names received from the printer 20. Alternatively, the display controller 13 may send the sheet type name, which may be selected from the displayed list, to the image data generator 15 such that the image data generator 15 may include the sheet type name in a printing job request.

The operation controller 14 controls operation of the PC 10 according to an instruction input by the user through the keyboard 133 or the pointing device 134. For example, the operation controller 14 may cause the display controller 13 to change the appearance or contents of the GUI according to the instruction input by the user. In another example, the operation controller 14 may cause the image data generator 15 to generate a printing job request based on the instruction input by the user.

The image data generator 15 generates a printing job request or a printing job storage request according to an instruction input by the user, and sends the printing job request or the printing job storage request to the printer 20 through the communication controller 12. The printing job request or printing job storage request may include information regarding a printing job to be performed, such as information indicating the time when the job is requested, information regarding image data to be printed, a selected sheet type to be used for printing the image data, various other printing setting information used for printing the image data, etc.

As described above referring to FIG. 1, the printer 20 is capable of managing information regarding a plurality of sheet types, such as registering a custom sheet type, changing information regarding the registered sheet type, sending or displaying the sheet type names, processing a printing job storage request, processing a printing job request, or detecting a printing job error.

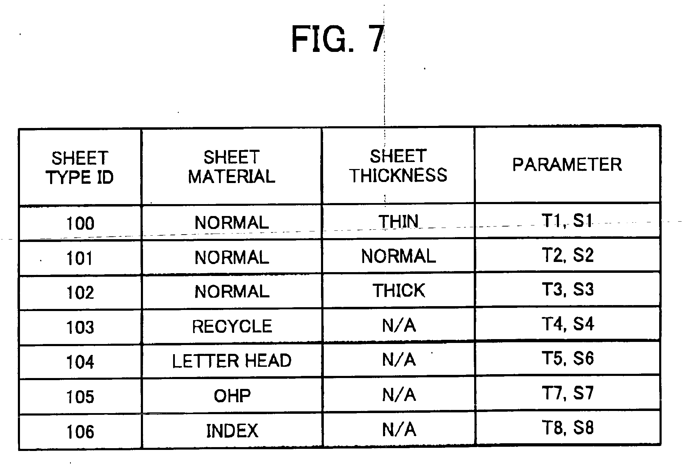

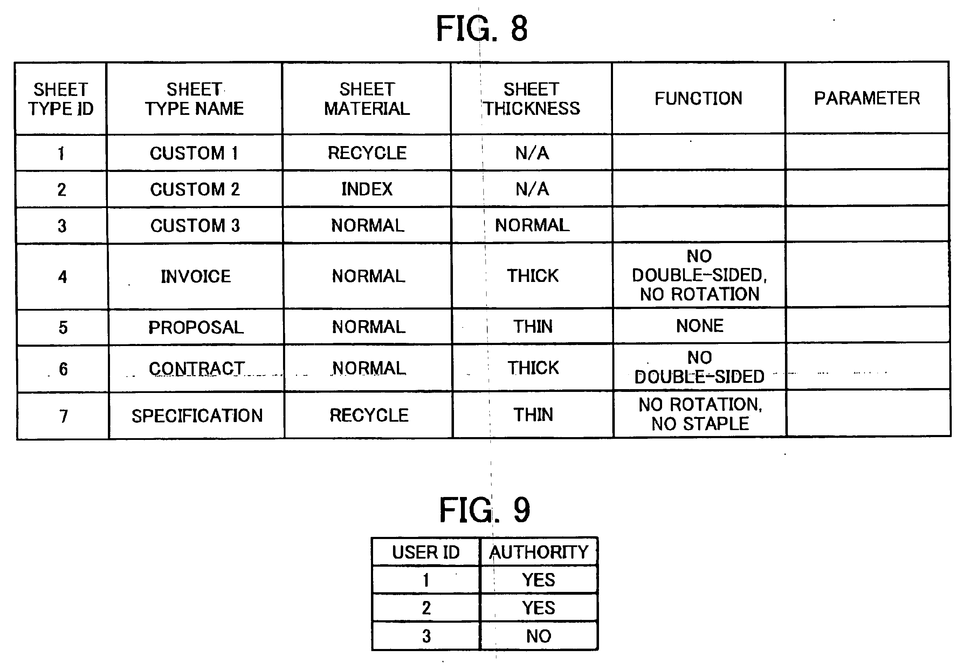

In this example, the printer 20 manages information regarding a plurality of sheet types in the form of table, which may be stored in any desired memory, such as the NVRAM 24 (FIG. 2) or the parameter memory 103 (FIG. 3). Specifically, in this example, the printer 20 is provided with a default sheet type table shown in FIG. 7 and a custom sheet type table shown in FIG. 8.

The default sheet type table of FIG. 7 stores an identification number of a default sheet type ("sheet type ID"), physical characteristics information of the default sheet type such as material ("sheet material") or thickness ("sheet thickness") of the default sheet type, and printing control parameters suitable for the default sheet type, in a corresponding manner. Additionally, the default sheet type table of FIG. 7 may store one or more functions to be applied for each one of the default sheet types. The default sheet type table of FIG. 7 may be preferably stored in a non-rewritable memory, such as the ROM 22 or the system memory 102.

The sheet type ID is an arbitrary number uniquely assigned to each default sheet type. Using the sheet type ID, the printer 20 manages information regarding the default sheet types stored in the default sheet type table. The sheet material may indicate whether the recoding sheet is normal paper, recycle paper, an OHP sheet, an index sheet, letterhead, etc. The sheet thickness may indicate the degree of thickness of the recording sheet. In this example, the degree of thickness is expressed in three levels including "THIN", "NORMAL", and "THICK". Alternatively, the degree of thickness may be expressed in any desired number of levels. As shown in FIG. 7, the sheet thickness may not be provided if the thickness of the recording sheet may be assumed based on other information of the recording sheet, such as the material of the recording sheet, or the corresponding sheet material has only one thickness level. Further, the sheet material may provide information other than the material of the recording sheet. For example, the letterhead and the normal paper may be the same in material, but different in appearance such that a logo may be additionally printed on the letterhead. The printing control parameters may include a fixing temperature (T1 to T8 in FIG 7) or a sheet transfer speed (S1 to S8 in FIG 7), which may be suitably used for the corresponding recording sheet type when performing an image forming operation using the printer engine 29 (FIG. 2) or the image forming devices (FIG. 3). The printing control parameters may be adjusted depending on one or more items of physical characteristics information, such as the sheet material or the sheet thickness. Some of the printing control parameters may be automatically updated depending on wear of the image forming devices.

The custom sheet type table of FIG. 8 stores a sheet type ID, sheet type name, physical characteristics information such as the sheet material or the sheet thickness, and printing control parameters in a corresponding manner for each one of a plurality of custom sheet types, which may be registered by the user. Additionally, the custom sheet type table of FIG. 8 may store one or more functions to be used for image forming, such as the function of duplex copying, punching, rotating, or stapling. The custom sheet type table of FIG. 8 may be stored in any rewritable memory, such as the NVRAM 24 or the parameter memory 103.

The sheet type name may be input by the user at the time of registering the custom sheet type. As shown in FIG. 8, the sheet type name including the word "CUSTOM" and the corresponding sheet type ID may be automatically assigned, by default, to each one of the plurality of custom sheet types at the time of registering. When or after registering, the user may change this default name to the name more meaningful to the user, such as the "CONTRACT" as shown in FIG. 8. The sheet type name may be used to identify each custom sheet type. The physical characteristics information regarding the recording sheet type, such as the sheet material or the sheet thickness, may be input by the user at the time of registering, for example, by selecting at least one of the sheet materials and the sheet thickness levels listed in the default sheet type table shown in FIG. 7. The functions may be input by the user at the time of registering, for example, by selecting at least one of the functions avilable for use by the printer 20. The printing control parameters may be determined based on the physical characteristics information regarding the recording sheet type, using the printing control parameters previously set for the default sheet types. In such case, the printing control parameters may be left blank. Alternatively, the printing control parameters may be set for each one of the custom sheet types according to the user preference.

Further, as illustrated in FIG 9, the printer 20 may be provided with an authorized user table, which specifies one or more authorized users who are authorized to use the corresponding custom sheet type, and/or one or more unauthorized users who are not authorized to use the corresponding custom sheet type. The authorized user table, such as the table shown in FIG. 9, may be provided for at least one of the plurality of custom sheet types listed in the table of FIG. 8. For example, assuming that the authorized user table of FIG. 9 is generated for the custom sheet type having the sheet type ID 1, the user assigned with the user ID 1 and the user assigned with the user ID 2 are authorized to use the custom sheet type having the sheet type ID 1. The user assigned with the user ID 3 is not authorized to use the custom sheet type having the sheet type ID 1.

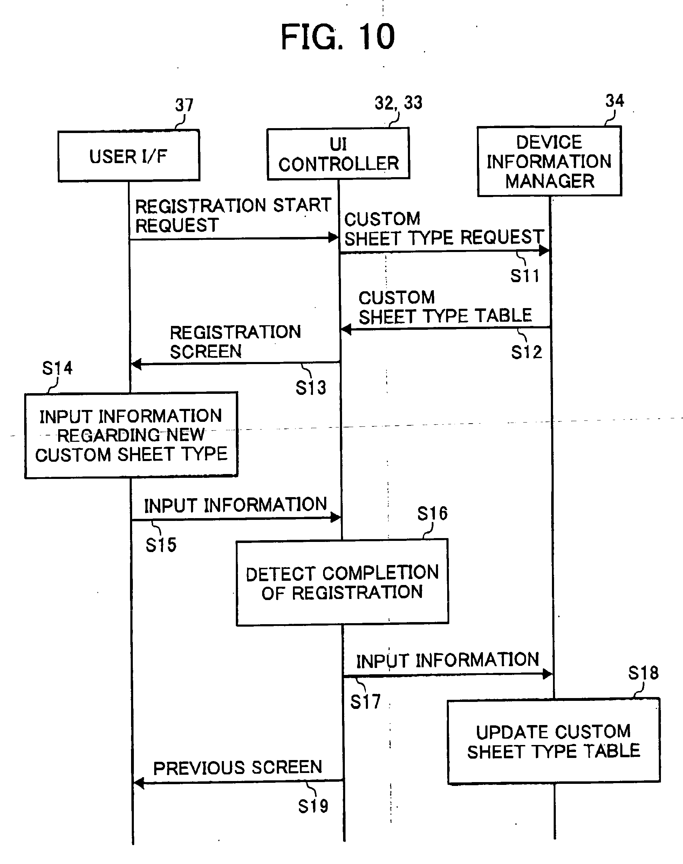

Referring now to FIG. 10, operation of registering a custom sheet type, performed by the printing system 1 of FIG 1, is explained. In one example, the user is assumed to register a custom sheet type through the operation panel 26 (FIG. 2) or the operation panel 105 (FIG. 3) of the printer 20. In another example, the user is assumed to register a custom sheet type through the display device 131 (FIG. 5) connected to the PC 10. For the descriptive purpose, the operation panel 26, the operation panel 105, and the display device 131 may be collectively referred to as a user I/F 37 as illustrated in FIG. 10.

At S11, upon receiving a registration start request from the user I/F 37, the communication controller 32 or the panel controller 33, which may be referred to as the UI controller, requests the device information manager 34 for information regarding the custom sheet types stored in the custom sheet type table of FIG 8 by sending a custom sheet type request.

At S12, upon receiving the custom sheet type request, the device information manager 34 obtains the information regarding the custom sheet types from the custom sheet type table of FIG. 8, and sends the obtained information to the U/I controller 32, 33.

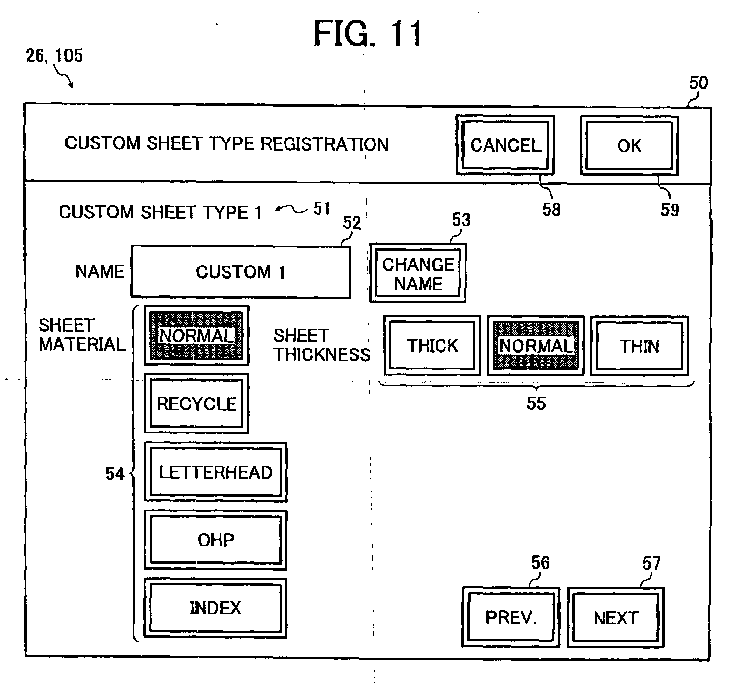

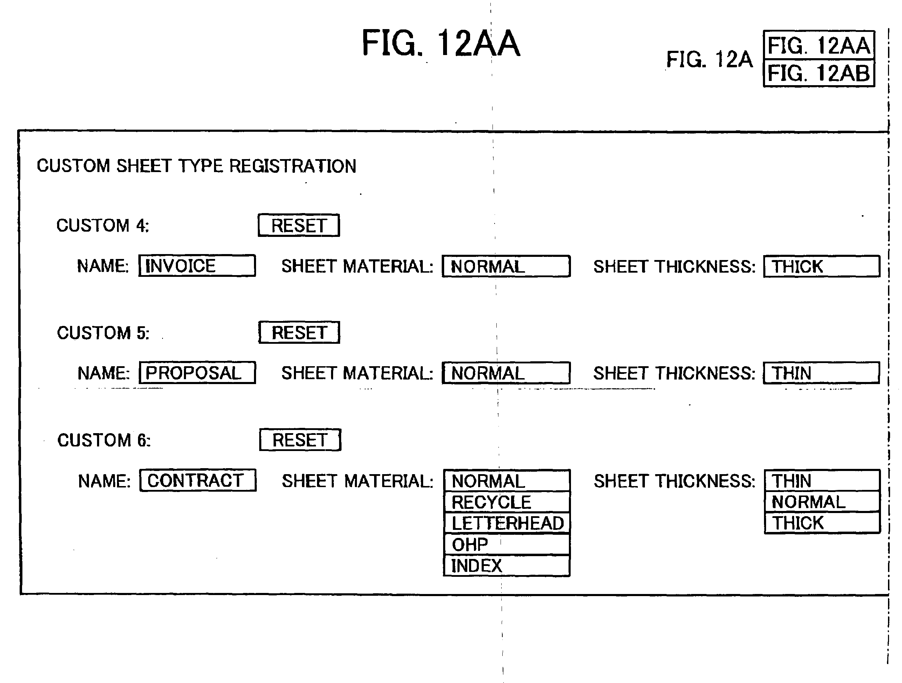

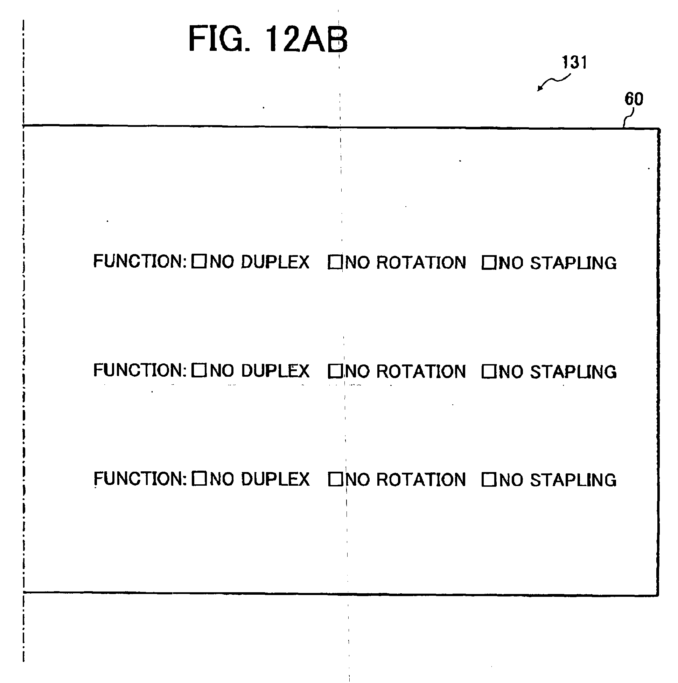

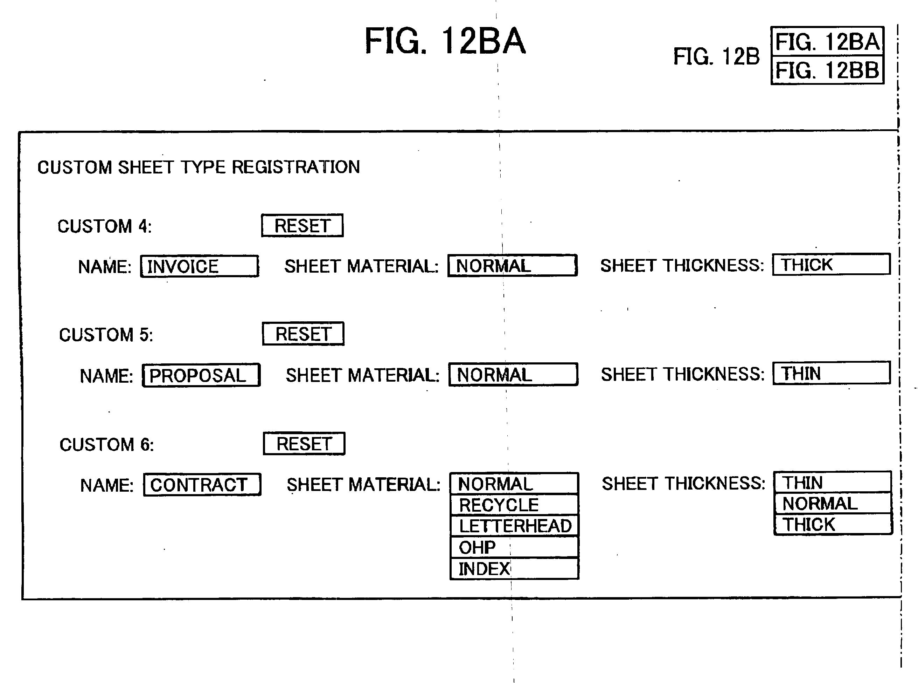

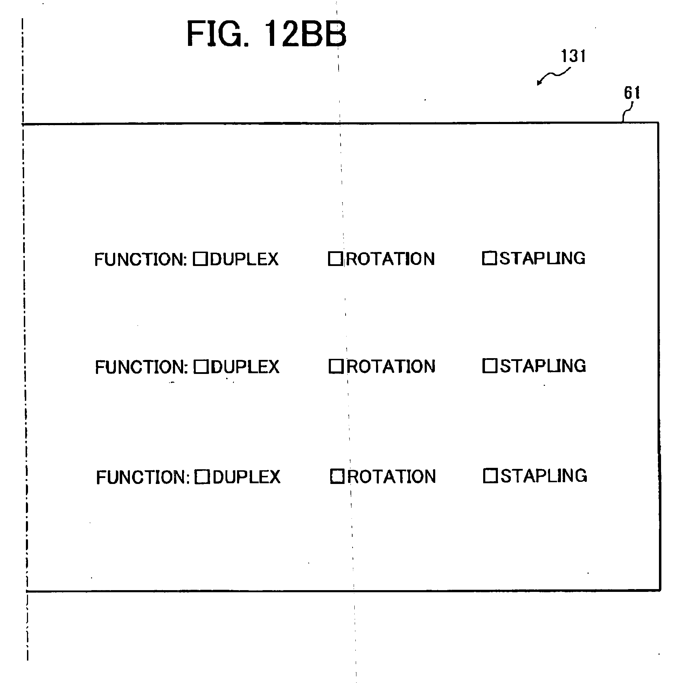

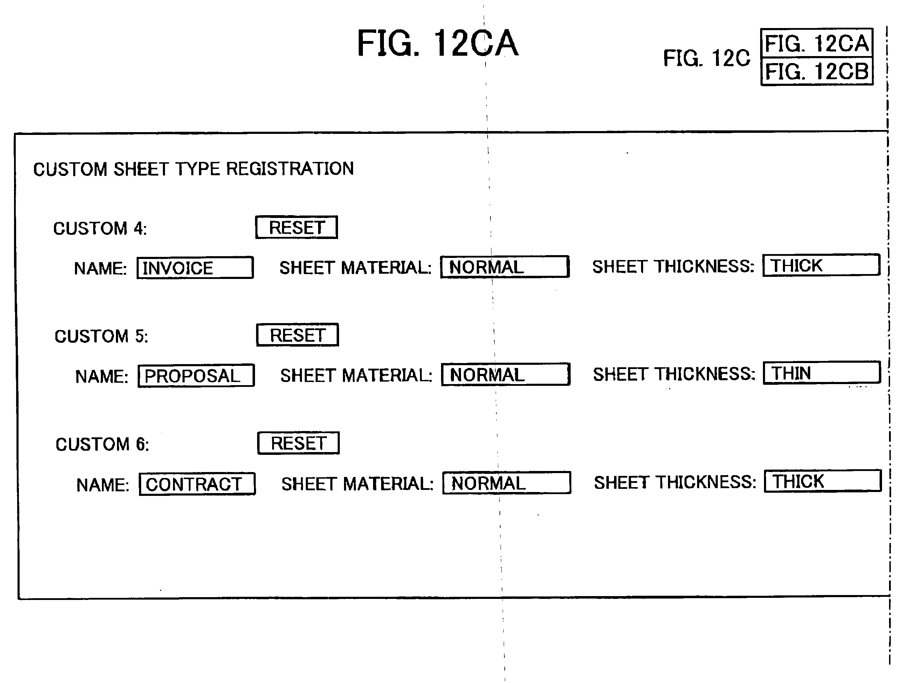

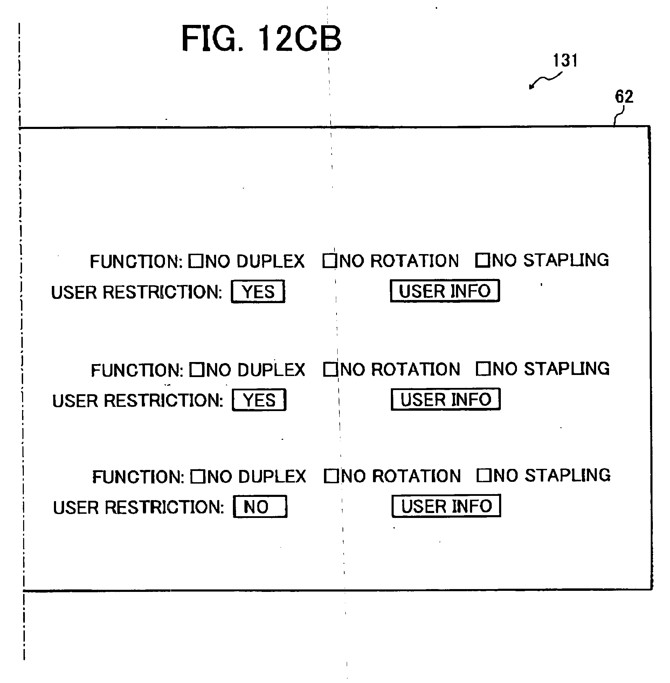

At 513, based on the obtained information, the U/I controller 32, 33 generates a registration screen to the user. Examples of the registration screen are illustrated in FIGS. 11, 12A, 12B, and 12C.

At S14, the user I/F 37 inputs various information ("input information") regarding a new custom sheet type to be registered, including a sheet type name assigned to the new custom sheet type, physical characteristics information to be set for the new custom sheet type, one or more functions to be used, information regarding one or more authorized users, etc.

At S15, the user I/F 37 sends the input information to the U/I controller 32, 33.

At S16, the U/I controller 32, 33 detects that inputting information regarding the new custom sheet type, i.e., the registration operation performed by the user, is completed. For example, the U/I controller 32, 33 detects that the registration operation is completed when an "OK" key 59 shown in FIG. 11 is pressed by the user.

At 517, the U/I controller 32, 33 sends the input information to the device information manager 34.

At S18, the device information manager 34 updates the custom sheet type table shown in FIG. 8 with the input information.

At S19, the U/I controller 32, 33 instructs the user I/F 37 to switch from the registration screen to the previous screen, which is previously displayed before starting the registration operation, and the operation ends.

FIG. 11 illustrates a registration screen 50, which allows the user to register a custom sheet type, according to an example embodiment of the present invention. For example, the printer 20 may display the registration screen 50 of FIG. 11 on the operation panel 26 (FIG. 2) or the operation panel 105 (FIG. 3), upon receiving the registration start request through the operation panel 26 or 105.

The registration screen 50 of FIG 11 includes a sheet type ID section 51, a sheet type name section 52, a "CHANGE NAME" key 53, a plurality of sheet material keys 54, a plurality of sheet thickness keys 55, a "PREV." key 56, a "NEXT" key 57, a "CANCEL" key 58, and the "OK" key 59.

The sheet type ID section 51 displays the ID number of a custom sheet type to be registered or updated. In this example, the custom sheet type having the sheet type ID 1 is selected for display. When the "PREV." key 56 is pressed, the sheet type ID section 51 displays a custom sheet type listed next in the custom sheet type table of FIG. 8. When the "NEXT" key 57 is pressed, the sheet type ID section 51 displays a custom sheet type listed previously in the custom sheet type table of FIG. 8.

The sheet type name section 52 displays a sheet type name assigned to the selected custom sheet type. In this example, the "CUSTOM 1" is automatically assigned to the custom sheet type having the sheet type ID 1. In order to change the name, the "CHANGE NAME" key 53 may be pressed. When the "CHANGE NAME" key 53 is pressed, a keyboard may be displayed in addition or in alternative to the registration screen 50, which allows the user to input one or more alphabets, numerals, etc. In this example, the custom sheet type name may be input using any language, for example, the language previously set by the user.

Alternatively, the sheet type name section 52 may be left blank. In such case, the "CHANGE NAME" key 53 may be replaced by a "INPUT NAME" key, which allows the user to input the name through the keyboard. In order to prevent the user from not inputting any name, the printer 20 may be additionally provided with the function of displaying an error message to the user when the user completes the registration without inputting any name in the sheet type name section 52.

Using at least one of the sheet material keys 54 and the sheet thickness keys 55, the user may defin*e the physical characteristics information of the new custom sheet type. In this example, the sheet material keys 54 each correspond to the sheet materials previously stored in the default sheet type table shown in FIG. 7. The sheet thickness keys 55 each correspond to the sheet thickness levels previously stored in the default sheet type table shown in FIG 7. Further, in this example, the thin level or the thick level of the sheet thickness may be selected only when the normal paper is selected for the sheet material.

When the "CANCEL" key 58 is pressed, the registration operation is cancelled, and the registration screen 50 is switched to the previous screen. At this time, the custom sheet type table of FIG. 8 is not updated. Alternatively, when the "OK" key 59 is pressed, the registration operation is completed, and the registration screen 59 is switched to the previous screen. At this time, the custom sheet type table of FIG. 8 is updated with input information previously input by the user as described above referring to FIG. 10.

FIG. 12A to 12C illustrate registration screens 60, 61, and 62, each of which allows the user to register a new custom sheet type, according to an example embodiment of the present invention. For example, the printer 20 may cause the PC 10 to display any one of the registration screens 60, 61, and 62 on the display device 131, upon receiving the registration start request from the PC 10. Any one of the registration screens 60 and 61 is substantially similar in function to the registration screen 50 shown in FIG. 11, except for the addition of a function of setting whether one or more functions are performed. The registration screen 62 shown in FIG. 12C is substantially similar in function to the registration screen 60 or 61, except for the addition of the function of notifying whether the user at the PC 10 is authorized to use the corresponding custom sheet type, and/or the function of setting one or more authorized users authorized to use the corresponding custom sheet type.

Referring to any one of FIGS. 12A, 12B, and 12C, the user may input a sheet type name by selecting the "NAME" section, using the keyboard 133 (FIG. 5). The user may select the sheet material by selecting at least one of the sheet materials listed in a pull-down menu of the "SHEET MATERIAL" section. The user may select the sheet thickness by selecting at least one of the thickness levels listed in a pull-down menu of the "SHEET THICKNESS" section.

Referring to FIG. 12A, when the user desires to perform duplex copying, the user leaves the "NO DUPLEX" check box unselected. When the user desires to change the orientation of the recording sheet, the user leaves the "NO ROTATION" check box unselected. When the user desires to staple the recording sheet, the user leaves the "NO STAPLING" check box unselected.

Referring to FIG. 12B, when the user desires to perform duplex copying, the user selects the "DUPLEX" check box. When the user desires to change the orientation of the recording sheet, the user selects the "ROTATION" check box. When the user desires to staple the recording sheet, the user selects the "STAPLING" check box.

Referring to FIG 12C, when the user logging onto the system is a general user, the user may be able to check whether the user is authorized to use any one of the custom sheet types displayed on the registration screen 62, using information displayed on the "USER RESTRICTION" section shown in FIG 12C. Alternatively, when the user logging onto the system is an administrator, the user may determine whether to restrict one or more users from using any one of the custom sheet types stored in the custom sheet type table of FIG. 8 or a new custom sheet type to be registered. For example, the user may change "NO" to "YES" of the "USER RESTRICTION" section when the user desires to restrict the use of the custom sheet type. In order to specifically set one or more users restricted from using the corresponding custom sheet type, or one or more users authorized to use the corresponding custom sheet type, the user selects the "USER INFO" key shown in FIG. 12C. When the "USER INFO" key is selected, the display device 131 may additionally display a list of registered users. From the list of registered users, the user may select one or more users restricted from using the corresponding custom sheet type, or one or more users authorized to use the corresponding custom sheet type. Such information regarding one or more authorized users may be stored in the authorized user table shown in FIG. 9.

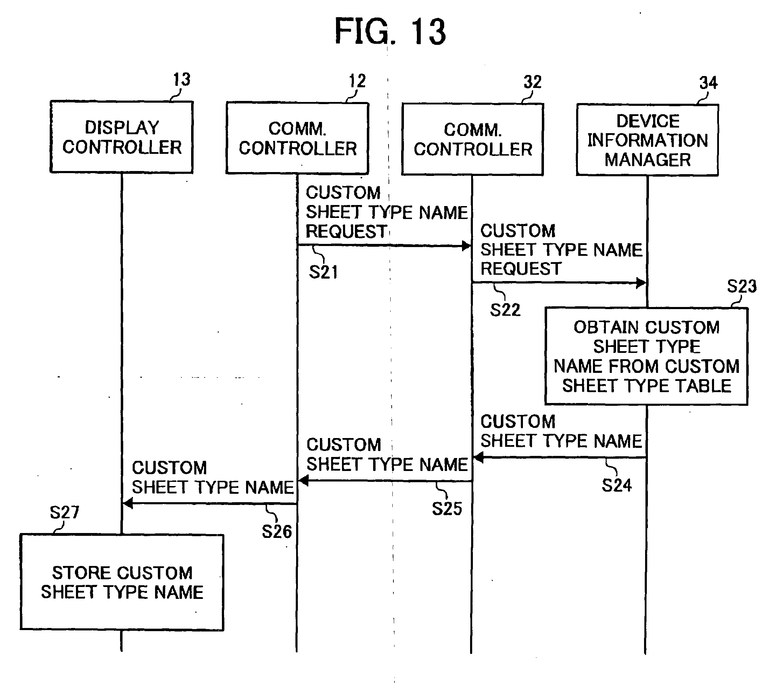

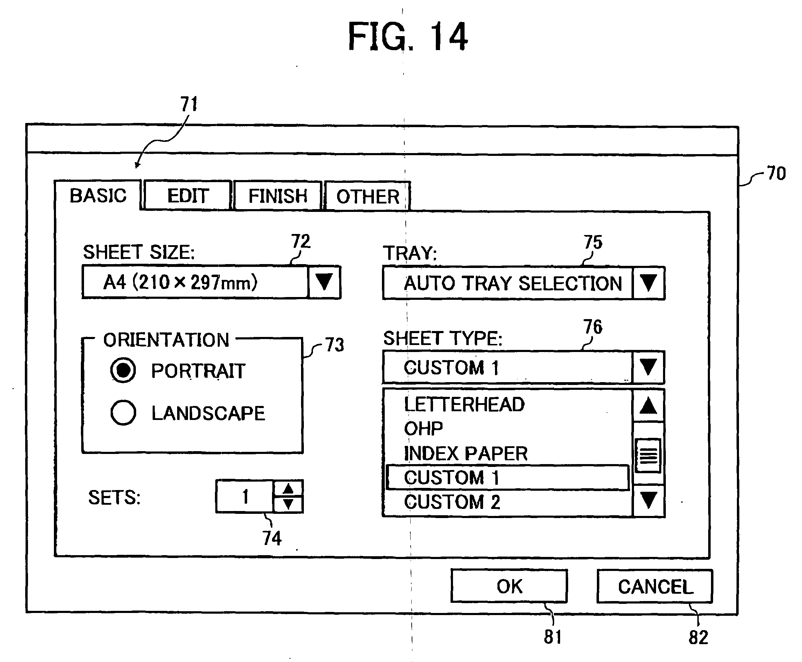

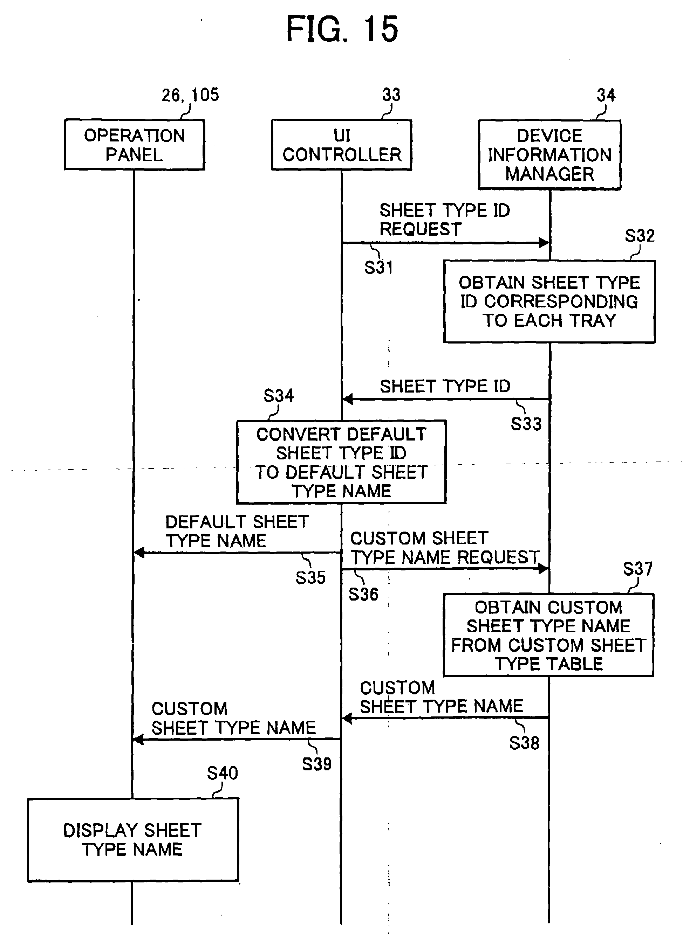

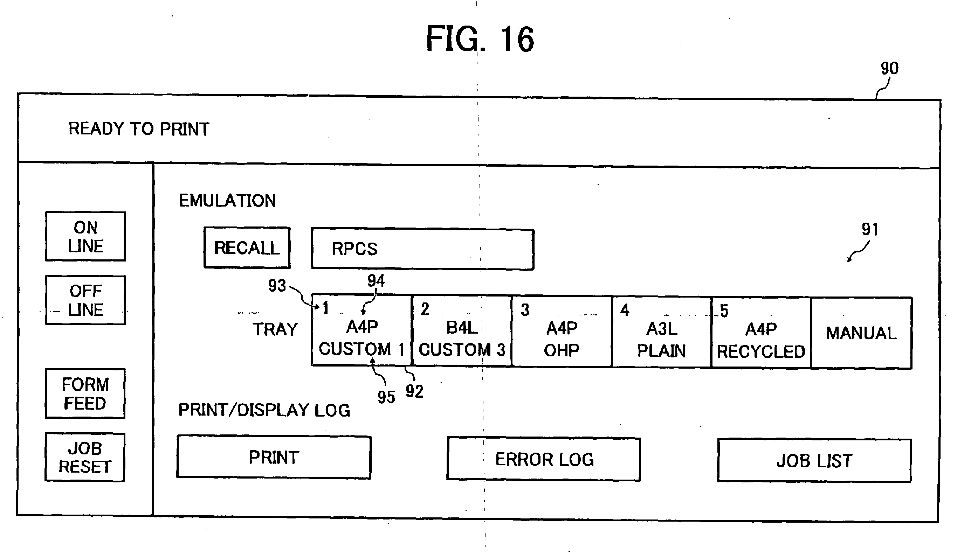

The information regarding the custom sheet types stored in the custom sheet type table of FIG. 8 may be displayed to the user in various ways. In one example, as illustrated in FIG. 13, the information regarding the custom sheet types may be displayed when the user requests the printer 20 to perform printing or the user requests the printer 20 to display a printing setting screen to confirm the printing setting. For example, when the user instructs the PC 10 to display the printing setting screen through an application program such as a word processor, spreadsheet, or viewer, the PC 10 may send a request for custom sheet type names ("the sheet type name request") to the printer 20. Upon receiving the sheet type name request, the printer 20 sends the custom sheet type names to the PC 10. Using the custom sheet type names, the PC 10 may generate and display a printing setting screen 70 shown in FIG. 14 on the display device 131. In another example, as illustrated in FIG. 15, the information regarding the custom sheet types may be displayed on a printing waiting screen 90 shown in FIG 16, which may be displayed on the operation panel 26 or 105 of the printer 20 when a request for displaying the printing waiting screen 90 is input by the user. The user may input such request, for example, by selecting the printing function through the operation panel 26. Alternatively, the printing waiting screen 90 may be set to an initial screen to be displayed when the power of the printer 20 is turned on.

Referring now to FIG. 13, operation of displaying the custom sheet type names on the printing setting screen 70 of FIG. 14 is explained according to an example embodiment of the present invention.

Upon receiving a request for displaying the printing setting screen 70 from the user, at S21, the communication controller 12 of the PC 10 sends a custom sheet type name request, which requests for custom sheet type names, to the communication controller 32 of the printer 20 via the network 40.

At S22, the communication controller 32 of the printer 20 sends the custom sheet type name request to the device information manager 34.

Upon receiving the custom sheet type name request, at S23, the device information manager 34 obtains the custom sheet type names respectively for the custom sheet types stored in the custom sheet type table of FIG. 8.

At S24, the device information manager 34 sends the custom sheet type names to the communication controller 32. In this example, the custom sheet type names may be expressed in the form of text data.

At S25, the communication controller 25 sends the custom sheet type names to the communication controller 12 of the PC 10 via the network 40 in response to the custom sheet type name request received at S21.

Once the custom sheet type names are received, at S26, the communication controller 12 sends the custom sheet type names to the display controller 13. At this time, the PC 10 may store the custom sheet type names in any desired memory of the PC 10, such as the memory 128 or any rewritable memory.

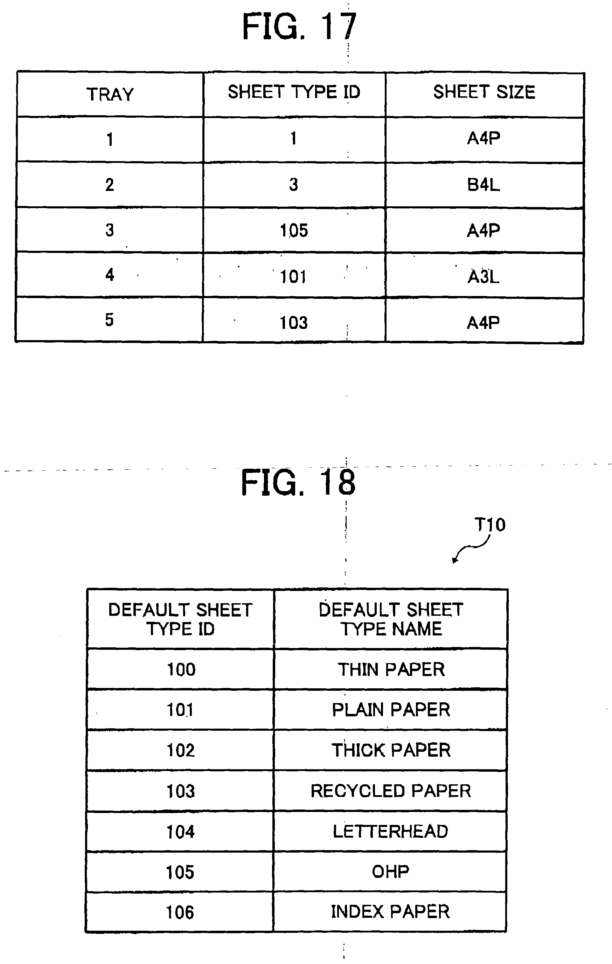

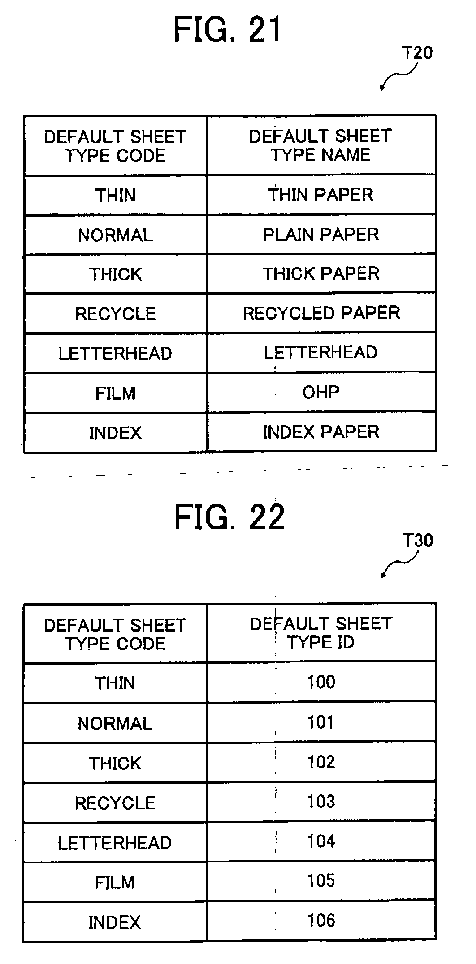

At S27, the display controller 13 generates the printing setting screen 70 shown in FIG. 14, using the custom sheet type names in addition to default sheet type names previously stored in any desired memory of the PC 10, such as the ROM 122. In this example, the default sheet type names, which may be expressed in the form of text data, are stored in a conversion table T10 illustrated in FIG. 18. Alternatively, the default sheet type names, which may be expressed in the form of text data, may be stored in a conversion table T20 shown in FIG 21.

Referring to FIG. 14, the printing setting screen 70 includes a plurality of function tabs 71 including a "Basic" tab, "Edit" tab, "Finish" tab, and "Other" tab. The user may switch between these tabs 71 to select a type of the printing setting information to be input or updated. When the "Basic tab" is selected as illustrated in FIG 14, the printing setting screen 70 provides a sheet size section 72, orientation section 73, printing set section 74, tray section 75, sheet type section 76, "OK" key 81, and "CANCEL" key 82. The sheet size section 72 lists a plurality of recording sheet sizes avilable for use in a pull-down menu, and allows the user to select one of the sizes for printing. The orientation section 73 allows the user to select the orientation of the recording sheet. The printing set section 74 allows the user to select or input the number of document sets to be printed. The tray section 75 lists a plurality of trays avilable for use in a pull-down menu, and allows the user to select one of the trays for printing. In alternative to selecting a specific tray, the user may select the auto tray selection function, which automatically selects a tray suitable for printing. The sheet type section 76 lists the names of a plurality of sheet types avilable for use in a pull-down menu, and allows the user to select one of the sheet types for printing. When the "OK" key 81 is pressed, the display controller 13 causes the communication controller 12 to send information regarding the selection made by the user using the printing setting screen 70 to the printer 20. At the same time, the display controller 13 switches the printing setting screen 70 back to the previous screen. When the "CANCEL" key 82 is pressed, the display controller 13 switches the printing section screen 70 back to the previous screen, without storing or sending any information regarding the selection made by the user using the printing setting screen 70.

In this example, any default sheet type name, which may be displayed on the sheet type section 76, may be previously stored in any desired memory of the PC 10, for example, as a part of the printer driver. Further, any custom sheet type name such as "Custom 1" or "Custom 2", which may be displayed on the sheet type section 76, may be received from the printer 20 as described above. In this manner, the PC 10 can notify the user of custom sheet types avilable for use, without the need of managing the information regarding the custom sheet types by itself. Further, since the PC 10 may receive the custom sheet type names from the printer 20 every time when the printing setting screen 70 of FIG. 14 is displayed, the user may be notified of the most updated information regarding the custom sheet types for use, even when the number of PC 10 is large. Further, in this example, the PC 10 receives the custom sheet type names in the form of text data. It is thus not necessary to convert the data format of the custom sheet type names before displaying the custom sheet type names. Further, it is not necessary for the PC 10 to store information indicating the correspondence between the custom sheet type names and the custom sheet type IDs.

In addition to the custom sheet type names, the PC 10 may display custom sheet type information obtainable from the custom sheet type table of FIG. 8. For example, when the "Finish" tab 71 of FIG. 14 is pressed, the printing setting screen 70 may display information regarding one or more functions to be used for the custom sheet type being selected in the sheet type section 76. The functions to be displayed when the "Finish" tab 71 is selected may include the functions related to finishing operation, including the function of punching, rotating, or stapling. In this manner, the user may be previously informed of any finishing function to be used, when a specific custom sheet type is selected. Further, this may prevent the user from selecting the function not applicable to a specific custom sheet type.

Alternatively, the printer 20 may cause the PC 10 to send an error message, when the user selects a finishing function not applicable to a specific custom sheet type.

Alternatively, the printer 20 may cause the PC 10 to undisplay a specific custom sheet type in the sheet type section 76, when the user logging onto the system is determined to be an unauthorized user who is not authorized to use the specific custom sheet type. This may prevent the user from selecting the custom sheet type that the user is prohibited from using.

Alternatively, the printer 20 may cause the PC 10 to display an error message, when the user logging onto the system selects a custom sheet type that the user is prohibited from using from the sheet types displayed on the pull-down menu of the sheet type section 76.

Referring to FIG. 15, operation of displaying the custom sheet type names on the printing waiting screen 90 shown in FIG. 16, performed by the printer 20, is explained.

Upon receiving the request for displaying the printing waiting screen 90, at S31, the panel controller 33 requests for sheet type IDs respectively assigned to a plurality of trays of the printer 20, by sending the sheet type ID request to the device information manager 34.

Upon receiving the sheet type ID request, at S32, the device information manager 34 obtains information regarding a sheet type ID assigned to each tray from a tray table stored in any desired memory of the printer 20, such as a tray table shown in FIG 17. At 533, the device information manager 34 sends the sheet type IDs to the panel controller 33. The tray table shown in FIG. 17 may be stored in a rewritable memory, such as the NVRAM 24 (FIG. 2) or the parameter memory 102 (FIG. 3). The tray table of FIG. 17 stores a plurality of sheet type IDs and a plurality of trays of the printer 20 in a corresponding manner. Information stored in the tray table may be changed according to the user preference.

Referring back to FIG. 15, at S34, upon receiving the sheet type ID assigned to each tray, the panel controller 33 extracts one or more sheet type IDs each corresponding to the default sheet type, and converts each default sheet type ID to the corresponding default sheet type name using the conversion table T10 shown in FIG. 18. The conversion table T10 of FIG. 18, which may be stored in the ROM 22 or the system memory 102, stores a plurality of default sheet type IDs and a plurality of default sheet type names in a corresponding manner. Alternatively, the correspondence between the default sheet type ID and the default sheet type name may be obtained from the default sheet type table shown in FIG 7, if the default sheet type table of FIG 7 additionally stores the sheet type name for each default sheet type ID. Once the default sheet type names are obtained for the corresponding default sheet type IDs assigned to the trays, at S35, the panel controller 33 sends the default sheet type names to the operation panel 26 or 105.

At S36, the panel controller 33 extracts one or more sheet type IDs each corresponding to the custom sheet type, and sends the custom sheet type name request to the device information manager 34, which requests for the custom sheet type names that respectively correspond to the custom sheet type IDs.

Upon receiving the custom sheet type name request, at S37, the device information manager 34 obtains the custom sheet type names corresponding to the custom sheet type IDs from the custom sheet type table shown in FIG 8. At S38, the device information manager 34 sends the custom sheet type names to the panel controller 33. At S39, the panel controller 33 sends the custom sheet type names to the operation panel 25 or 105. The custom sheet type name may be expressed in the form of text data.

Using the default sheet type names received at S35 and the custom sheet type names received at S39, the operation panel 26 or 105 displays the sheet type names that respectively correspond to the trays of the printer 20 on the printing waiting screen 90 shown in FIG. 16.

Referring to FIG 16, the printing waiting screen 90 includes a tray select section 91, which displays information regarding recording sheet types respectively assigned to the trays of the printer 20 including trays 1 to 5. The tray select section 91 further allows the user to select one of the trays 1 to 5, for example, before generating a printing job request. The tray select section 91 includes six tray select keys 92 including five tray select keys 9 respectively corresponding to the trays of the printer 20 and one tray select key 9 corresponding to a manual tray of the printer 20. In each tray select key 92, a tray number section 93 displaying the tray number assigned to the tray, a sheet size section 94 displaying the size of the recording sheet assigned to the tray, and a sheet type section 95 displaying the name of the sheet type assigned to the tray are provided. As described above, information included in the tray select section 91 may be generated based on the tray table shown in FIG. 17, the conversion table T10 shown in FIG 18, the default sheet type table shown in FIG. 7, and/or the custom sheet type table shown in FIG. 8.

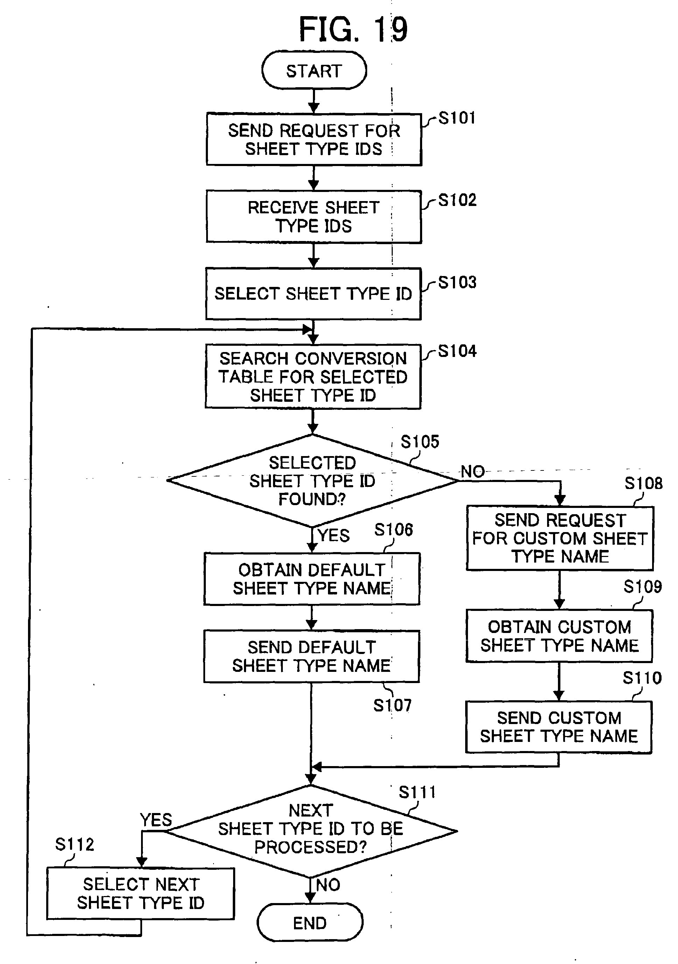

Referring to FIG. 19, operation of displaying the custom sheet type names on the printing waiting screen 90 shown in FIG. 16, performed by the panel controller 33 of the printer 20, is explained.

S101 requests the device information manager 34 to send the sheet type IDs of sheet types respectively assigned to the trays of the printer 20. S 102 receives the sheet type IDs of the sheet types from the device information manager 34.

S103 selects one of the sheet type IDs received at S102. S104 searches through the conversion table T10 shown in FIG. 18 for the selected sheet type ID. S105 determines whether the selected sheet type ID is found in the conversion table T10 of FIG. 18. If the selected sheet type ID is found ("YES" at S105), the operation proceeds to S106. Otherwise ("NO" at S105), the operation proceeds to S108.

S106 obtains a default sheet type name that corresponds to the selected sheet type ID, using the conversion table T10 shown in FIG 18.

S107 sends the default sheet type name to the operation panel 26 or 105 for display.

S108 requests the device information manager 34 to send a custom sheet type name that corresponds to the selected sheet type ID. S109 obtains the custom sheet type name that corresponds to the selected sheet type ID from the custom sheet type table shown in FIG. 8. S110 sends the custom sheet type name to the operation panel 26 or 105.

S111 determines whether there is another sheet type ID to be processed. If there is the sheet type ID to be processed ("YES" at S111), the operation proceeds to

S 112 to select a next sheet type ID for processing. If there is no sheet type ID to be processed ("NO" at S111), the operation ends.

The operation of FIG. 19 may be performed in various other ways. For example, any other table, such as the default sheet type table, may be used to determine whether the selected sheet type ID corresponds to a default sheet type or a custom sheet type, as long as the correspondence between the sheet type ID and the default sheet type or the custom sheet type is obtained.

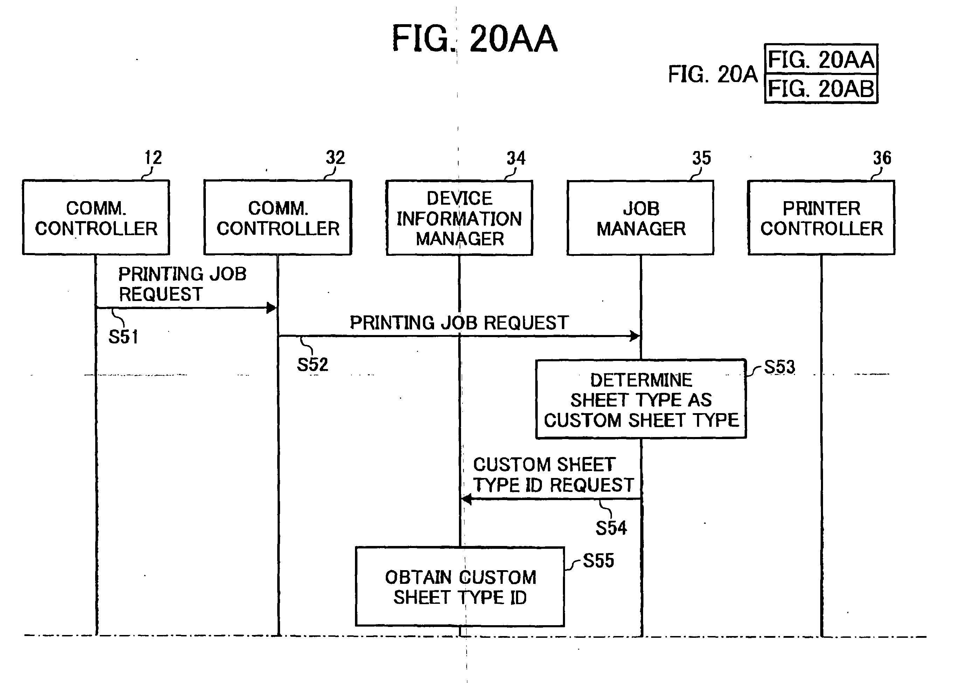

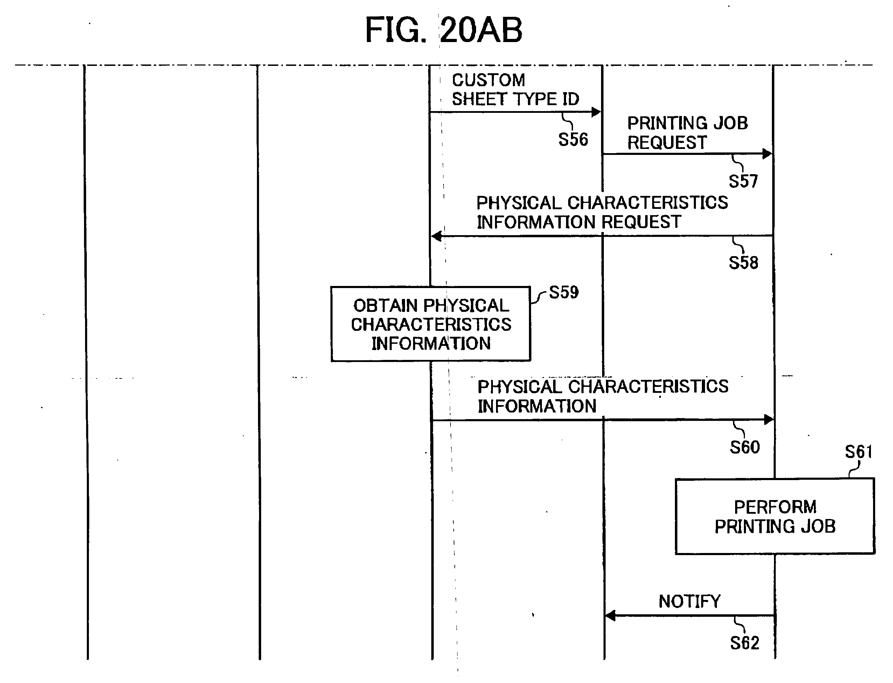

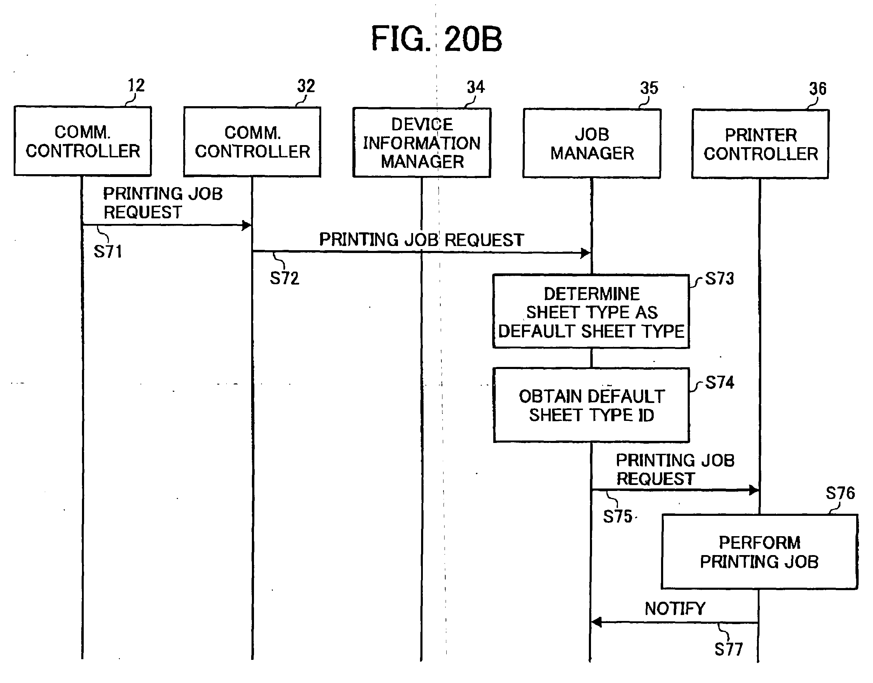

In addition to or in alternative to the example cases of displaying the custom sheet type name, the custom sheet type name may be used to generate a printing job request, which may be sent from the PC 10 to the printer 20, for example, as illustrated in any one of FIGS. 20A and 20B.

Referring to FIG. 20A, operation of processing a printing job request sent by the PC 10, performed by the printer 20, is explained according to an example embodiment of the present invention. In this example, the printing job request requests the printer 20 to use a custom sheet type for printing.

When the operation controller 14 of the PC 10 detects a user instruction for printing, the image data generator 15 of the PC 10 generates a printing job request, which requests the printer 20 to perform a printing job. The printing job request may include information regarding a printing job to be performed, such as information indicating the time when the job is requested, information regarding image data to be printed, information regarding the recording sheet type to be used for printing, etc. The printing job request is sent to the printer 20 by the communication controller 12 through the network 40. For example, the image data generator 15 may generate the printing job request based on printing setting information, which may be input by the user through the printing setting screen 70 of FIG. 14. The printing setting information include, but not limited to, information regarding a recording sheet type, the number of document sets to be printed, whether to perform one or more functions including duplex printing, punching, or stapling, the tray storing the recording sheet to be used, etc. The recording sheet type to be used for printing may be set for each one of a plurality of pages, when the image data to be printed has more than one page. Further, in this example, the custom sheet type name, which may be selected from the sheet type section 76, is included in the printing job to indicate the custom sheet type to be used for printing. In this example, the custom sheet type names may be stored in any desired memory of the PC 10, when the PC 10 receives the custom sheet type names from the printer 20 in response to the sheet type name request.

Referring to FIG. 20A, at S52, upon receiving the printing job request sent from the communication controller 12 of the PC 10 at S51, the communication controller 32 of the printer 20 sends the printing job request to the job manager 35.

At S53, the job manager 35 analyzes the printing job request, and determines that the sheet type specified by the printing job request corresponds to the custom sheet type. In this example, the job manager 35 determines whether the sheet type specified by the printing job request corresponds to a default sheet type, using a conversion table T30 shown in FIG. 22, which may be stored in a non-rewritable memory, such as the ROM 22 or the system memory 102. The conversion table T30 of FIG. 22 stores a plurality of default sheet type codes and a plurality of default sheet type IDs in a corresponding manner. For example, the job manager 35 may extract identification information of the sheet type, such as a custom sheet type name, from the printing job request, and search through the conversion table T30 shown in FIG. 22 for the extracted identification information. When the identification information is not found in the conversion table T30 of FIG. 22, the job manager 35 determines that the sheet type specified by the printing job request is the custom sheet type.

At S54, the job manager 35 requests the device information manager 34 for the custom sheet type ID, by sending the custom sheet type name extracted from the printing job request.

Upon receiving the custom sheet type ID request, at S55, the device information manager 34 obtains the custom sheet type ID that corresponds to the extracted custom sheet type name from the custom sheet type table shown in FIG. 8. At S56, the device information manager 34 sends the custom sheet type ID to the job manager 35. The job manager 35 re-writes the printing job request by replacing the custom sheet type name with the obtained custom sheet type ID.

When the job manager 35 determines that the printer 20 is ready for performing the printing job, at S57, the job manager 35 sends the printing job request to the printer controller 36. At this time, the custom sheet type specified by the printing job is expressed in the form of custom sheet type ID received from the device information manager 34.

At S58, the printer controller 36 requests the device information manager 34 for physical characteristics information regarding the custom sheet type specified by the printing job, such as the sheet material or the sheet thickness of the custom sheet type.

At S59, the device information manager 34 obtains the physical characteristics information, such as the sheet material or the sheet thickness, which corresponds to the custom sheet type ID from the custom sheet type table of FIG 8. At S60, the device information manager 34 sends the physical characteristics information to the printer controller 36. In this example, the printer controller 36 determines one or more printing control parameters to be used for image forming based on the physical characteristics information of the custom sheet type. For example, the printer controller 36 selects a default sheet type, which has the sheet material and/or sheet thickness substantially equal to the sheet material and/or sheet thickness of the custom sheet type, from the default sheet types stored in the default sheet type table of FIG. 7. The printer controller 36 may set the printing control parameters of the custom sheet type, using the printing control parameters that correspond to the selected default sheet type.

At S61, the printer controller 36 causes the engine 29 (FIG. 2) or the image forming devices of FIG. 3 to perform the printing job according to the printing control parameters obtained as described above.

At S62, the printer controller 36 notifies the job manger 35 of completion of the printing job, and the operation ends.

The operation of FIG. 20A may be performed in various other ways. For example, when the custom sheet type table of FIG. 8 stores the printing control parameters, at S58, the printer controller 36 may request the device information manager 34 for the printing control parameters that correspond to the custom sheet type ID. In such case, the device information manager 34 obtains and sends the printing control parameters to the printer controller 36. In another example, the printing job request may be directly input by the user through the operation panel 26 or 105. In such case, the communication controller 12 may be replaced by the user, while the communication controller 32 may be replaced by the panel controller 33.

Referring to FIG. 20B, operation of processing a printing job request sent by the PC 10, performed by the printer 20, is explained according to an example embodiment of the present invention. In this example, the printing job request specifies a default sheet type as a recording sheet type to be used for printing.

When the operation controller 14 of the PC 10 detects a user instruction for printing, the communication controller 12 generates a printing job request in a substantially similar manner as described above referring to FIG. 20A, except that a default sheet type is selected as a recording sheet type to be used for printing. In this example, the PC 10 may store a conversion table T20 shown in FIG. 21 as a part of the printer driver. The conversion table T20 stores a plurality of default sheet type codes and a plurality of default sheet type names in a corresponding manner. For example, the user may select a default sheet type name from the default and custom sheet type names displayed on the sheet type section 76 of the printing setting screen 70 shown in FIG 14. Once the selection is input through the operation controller 14, the image data generator 15 converts the selected default sheet type name to a default sheet type code, using the conversion table T20 of FIG. 21. The image data generator 15 further generates a printing job request including the default sheet type code.

Referring to FIG. 20B, upon receiving the printing job request sent from the communication controller 12 at S71, at S72, the communication controller 32 of the printer 20 sends the printing job request to the job manager 35.

At S73, the job manager 35 analyzes the printing job request, and determines that the sheet type specified by the printing job request corresponds to the default sheet type. For example, the job manager 35 may extract identification information of the sheet type, such as a default sheet type code, from the printing job request, and search through the conversion table T30 shown in FIG. 22 for the extracted identification information. When the identification information is found in the conversion table T30 of FIG. 22, the job manager 35 determines that the sheet type specified by the printing job request is the default sheet type.

At S74, the job manager 35 obtains a default sheet type ID that corresponds to the extracted default sheet type code from the conversion table T30 shown in FIG 22. At this time, the job manager 35 rewrites the printing job request by replacing the default sheet type code with the obtained default sheet type ID.

When the job manager 35 determines that the printer 20 is ready for performing the printing job, at 575, the job manager 35 sends the printing job request to the printer controller 36. At this time, the default sheet type specified by the printing job request is expressed in the form of default sheet type ID obtained at S74.

At S76, the printer controller 36 causes the engine 29 (FIG. 2) or the image forming devices of FIG. 3 to perform the printing job according to the printing control parameters that correspond to the default sheet type ID, which may be obtained from the default sheet type table of FIG 7.

At S77, the printer controller 36 notifies the job manager 35 that the printing job is completed, and the operation ends.

The operation of FIG. 20B may be performed in various other ways. For example, in order to determine whether the selected sheet type is a default sheet type, any table other than the conversion table T30 of FIG 22 may be used. In another example, the printing job request may be directly input by the user through the operation panel 26 or 105. In such case, the communication controller 12 may be replaced by the user, while the communication controller 32 may be replaced by the panel controller 33.

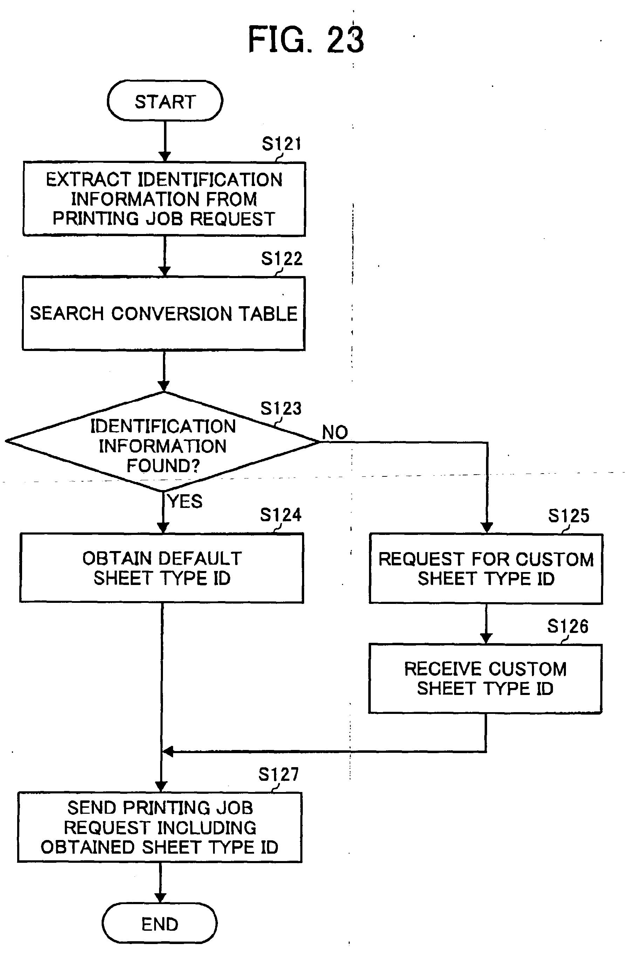

Referring to FIG 23, operation of processing a printing job request received from the PC 10, performed by the job manager 35 of the printer 20, is explained according to an example embodiment of the present invention.

S121 extracts identification information, such as a custom sheet type name or a default sheet type code, from the printing job request.

S122 searches through the conversion table T30 shown in FIG. 22 for the extracted identification information.

S123 determines whether the search result of S122 indicates that the extracted identification information is found in the conversion table T30 of FIG. 22. When the search result indicates that the extracted identification information is found ("YES" at S123), it is determined that the extracted identification information, i.e., the extracted sheet type code, corresponds to a default sheet type, and the operation proceeds to S124. When the search result indicates that the extracted identification information is not found ("NO" at.S123), it is determined that the extracted identification information, i.e., the extracted sheet type name, corresponds to a custom sheet type, and the operation proceeds to S125.

S124 obtains a default sheet type ID that corresponds to the extracted default sheet type code from conversion table T30 of FIG. 22.

S125 requests the device information manager 34 for a custom sheet type ID that corresponds to the extracted custom sheet type name. Upon receiving the request, the device information manger 34 refers to the custom sheet type table shown in FIG. 8 to obtain the custom sheet type ID that corresponds to the extracted custom sheet type name.

S126 receives the custom sheet type ID that corresponds to the extracted custom sheet type name from the device information manager 34.

S127 sends a printing job request to the printer controller 36 at a predetermined timing, and the operation ends. The printing job request includes the sheet type ID, which may be obtained at S124 or S126.

The operation of FIG. 23 may be performed in various other ways. For example, instead of determining whether the identification information, i.e, the sheet type name or code, sent from the PC 10 corresponds to a default sheet type or a custom sheet type using the conversion table, the printer 20 may be able to determine whether the sheet type name or code is default or custom based on an additional sign that may be assigned to the custom sheet type name. In such case, the PC 10 adds the sign, such as the "+" sign, to the custom sheet type name before sending the custom sheet type name to the printer 20. Referring to FIG. 23, S122 and S123 may be replaced by Step of determining whether the additional sign is added to the sheet type name or code extracted from the printing job request at S121. When the additional sign is not added, the operation proceeds to S124. When the additional sign is added, the operation proceeds to S125. At S125, the custom sheet type name without the additional sign is sent to the device information manager 34.

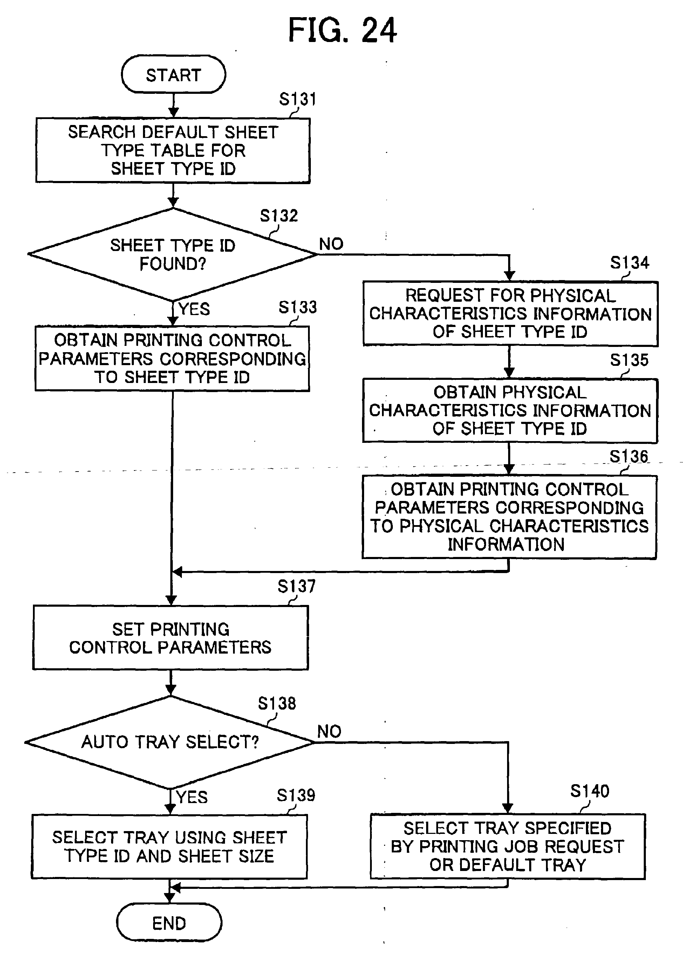

Referring to FIG. 24, operation of performing a printing job, performed by the printer controller 36 of the printer 20, is explained according to an example embodiment of the present invention. The operation of FIG. 24 may correspond to S58 to S61 of FIG. 20A or S76 of FIG. 20B.

S131 searches through the default sheet type table of FIG. 7 for the sheet type ID, which can be extracted from the printing job received from the job manager 35.

S132 determines whether the search result of S131 indicates that the sheet type ID is found in the default sheet type table of FIG. 7. When the search result indicates that the sheet type ID is found ("YES" at S132), it is determined that the sheet type ID corresponds to the default sheet type ID, and the operation proceeds to S133. When the search result indicates that the sheet type ID is not found ("NO" at S132), it is determined that the sheet type ID corresponds to the custom sheet type ID, and the operation proceeds to S134.

S133 obtains the printing control parameters that correspond to the default sheet type ID from the default sheet type table of FIG. 7.

S134 requests the device information manger 34 for physical characteristics information, such as the sheet material or the sheet thickness, corresponding to the custom sheet type ID. At this time, the device information manager 34 obtains the physical characteristics information of the custom sheet type ID from the custom sheet type table shown in FIG. 8.

S135 receives the physical characteristics information that corresponds to the custom sheet type ID from the device information manager 34.

S136 obtains the printing control parameters that correspond to the physical characteristics information obtained at 5135, from the default sheet type table of FIG. 7. Specifically, the printer controller 36 selects one default sheet type having the physical characteristics information similar to the physical characteristics information of the custom sheet type ID, and obtains the printing control parameters that correspond to the selected default sheet type as the printing control parameters to be used for the custom sheet type.

S137 sets the printing control parameters, which may be obtained at S133 or S136, as printing control parameters to be used by printer engine 29 (FIG. 2) or the image forming devices of FIG. 3.

S138 determines whether the auto tray select function is turned on. When the auto tray select function is turned on ("YES" at S138), the operation proceeds to S139. When the auto select function is turned off ("NO" at S138), the operation proceeds to S140.

S139 selects a tray to be used from the trays avilable for use, according to the printing setting information including the sheet type ID specified by the printing job request, and the sheet size specified by the printing job request. The printer controller 36 performs the printing job according to the printing control parameters obtained at S133 or S136, using the tray selected at S139, and the operation ends. When the tray that can satisfy the printing setting is not found, the printer controller 36 may notify the job manager 35 that an error is generated.

S140 selects a tray specified by the printing job request or a tray previously set by the printer 20 as a default. The printer controller 36 performs the printing job according to the printing control parameters obtained at S133 or S136, using the tray selected at S140, and the operation ends.

The operation of FIG. 24 may be performed in various other ways. For example, as described above referring to FIG. 20A, the printing control parameters may be obtained directly from the custom sheet type table shown in FIG 8, if information regarding the printing control parameters is stored.

As described above, the printer 20 manages various information regarding a plurality of sheet types using the sheet type ID. The use of the sheet type ID may suppress the work load of the printer 20, increase the processing speed of the printer 20, reduce memory consumption of the printer 20, reduce the overall development cost of the printer 20, etc.

Further, since the printer 20 is provided with information indicating the correspondence between the sheet type name and the sheet type ID or information indicating the correspondence between the sheet type code and the sheet type ID, the printer 20 is capable of analyzing a printing job request even when the printing job request specifies a sheet type using the corresponding sheet type name or sheet type code. Thus, it is not necessary for the PC 10 to store information indicating the correspondence between the sheet type name and the sheet type ID or information indicating the correspondence between the sheet type code and the sheet type ID, as long as the sheet type name or the sheet type code is stored. In this example, the sheet type name or the sheet type code may be stored as text data, which may be used for display. This may suppress the work load of the PC 10, increase the processing speed of the PC 10, reduce memory consumption of the PC 10, reduce the overall development cost of the PC 10, etc.

Further, since information regarding a plurality of sheet types is centrally managed by the printer 20, the most updated information may be easily sent to any number of PC 10.

Referring back to FIG 13, when the PC 10 displays the printing setting screen 70 shown in FIG. 14, the PC 10 requests the printer 20 for the names of one or more custom sheet types avilable for use by the printer 20. The PC 10 generates the printing setting screen 70, which includes the custom sheet type names that are updated, and the default sheet type names that are previously stored in the PC 10.

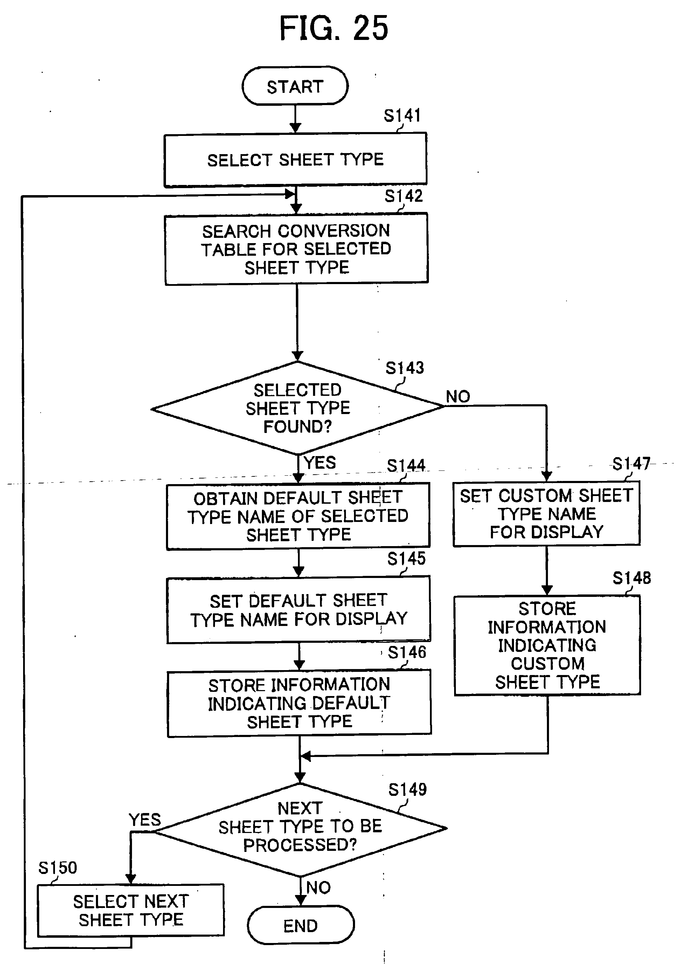

Alternatively, the PC 10 may additionally request the printer 20 for the names of one or more default sheet types avilable for use by the printer 20 such that the default sheet type names that are updated may be displayed to the user. For example, the PC 10 may send a default sheet type code request to the printer 20, which requests for the default sheet type codes of a plurality of default sheet types avilable for use by the printer 20, in addition to the custom sheet type name request. Upon receiving the default sheet type code request, the printer 20 obtains the default sheet type codes avilable to the printer 20 from the conversion table T30 of FIG 22, in addition to the custom sheet type names obtained from the custom sheet type table of FIG. 8. Once the default sheet type codes and the custom sheet type names are received from the printer 20, the PC 10 may perform operation shown in FIG. 25.

Referring to FIG. 25, S141 selects a sheet type name or a sheet type code from the sheet type names and the sheet type codes received from the printer 20.

S142 searches through the conversion table T20 of FIG. 21 for the selected sheet type name or code.

S143 determines whether the search result indicates that the selected sheet type name or code is found in the conversion table T20. When the search result indicates that the selected sheet type name or code is found ("YES" at S 143), it is determined that the selected sheet type code corresponds to a default sheet type, and the operation proceeds to S144. When the search result indicates that the selected sheet type name or code is not found ("NO" at S143), it is determined that the selected sheet type name corresponds to a custom sheet type, and the operation proceeds to S147.

S144 obtains a default sheet type name that corresponds to the selected default sheet type code from the conversation table T20 of FIG. 21. S145 sets the default sheet type name for display. S146 stores information indicating that the default sheet type name corresponds to the default sheet type.

S147 sets the selected custom sheet type name for display.

S148 stores information indicating that the custom sheet type name corresponds to the custom sheet type.

S149 determines whether there is another sheet type name or code to be processed. When the sheet type name or code to be processed exists ("YES" at S149), the operation proceeds to S150 to select a next sheet type name or code to be processed next. When the sheet type name or code to be processed does not exist ("NO" at S 149), the operation ends.

Using the operation of FIG. 25, the PC 10 is capable of displaying the default sheet type names that are currently available for use by the printer 20.

The operation of FIG. 25 may be performed in various other ways. For example, instead of determining whether the sheet type name or code sent from the printer 20 corresponds to a default sheet type or a custom sheet type using the conversion table, the PC 10 may be able to determine whether the sheet type name or code is default or custom based on an additional sign that may be assigned to the custom sheet type name. In such case, the printer 20 adds the sign, such as the "+" sign, to the custom sheet type name before sending the custom sheet type name to the PC 10. Referring to FIG. 25, S142 and S143 may be replaced by Step of determining whether the additional sign is added to the sheet type name or code selected at S 141. When the additional sign is not added, the operation proceeds to S144. When the additional sign is added, the operation proceeds to S147. At S147, the custom sheet type name without the additional sign is set to be used for display.

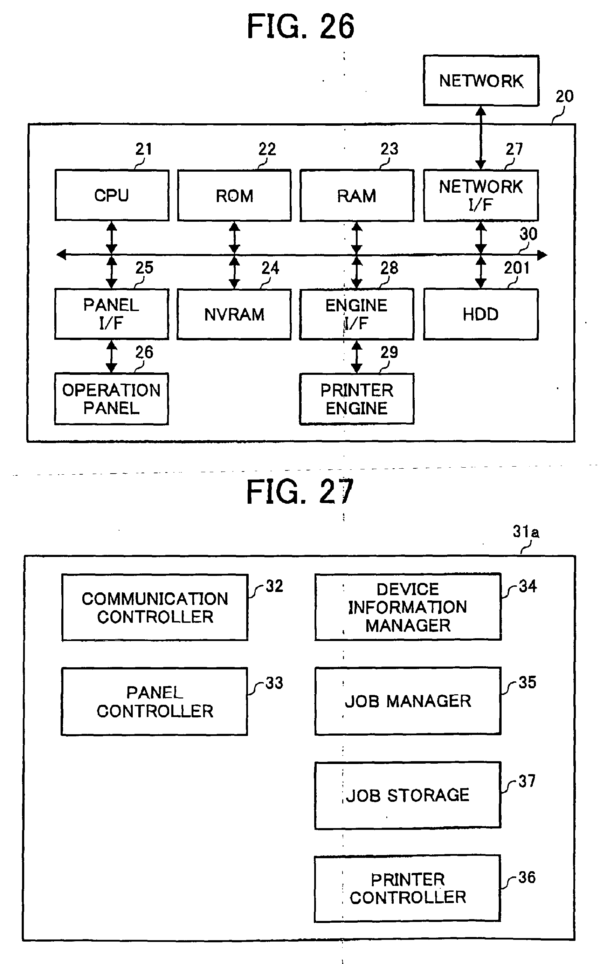

The printer 20 of FIG. 2 or 3 performs a printing job request when the printing job request is received from the user. Alternatively, the printer 20 of FIG. 1 may perform a printing job at a predetermined timing after the printing job request is received from the user. For example, the printer 20 may allow the user to store a printing job, which is to be performed at later time. In such case, as illustrated in FIG. 26, the printer 20 of FIG. 2 or 3 is additionally provided with a hard disk drive (HDD) 201, which stores a large amount of data including one or more printing jobs to be performed by the printer 20. Further, the printer 20 is assumed to have a functional structure shown in FIG 27. The functional structure of FIG. 27 is substantially similar to the functional structure of FIG. 4, except for the addition of a job storage 37. The job storage 37 stores one or more printing jobs to be performed by the printer 20, which may be received from the PC 10 through the network 40 or input through the operation panel 26 or 105.

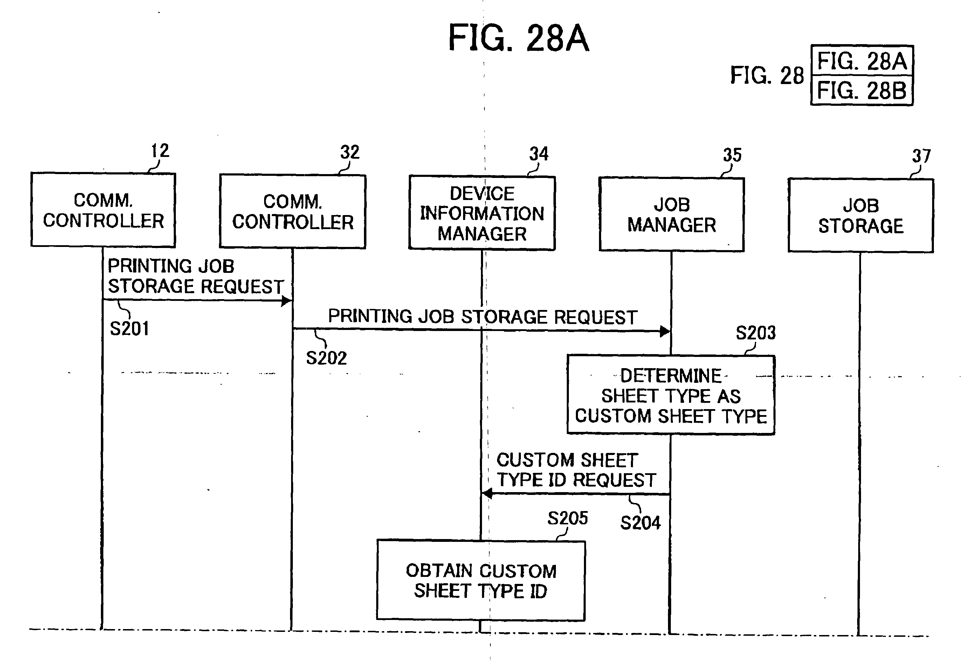

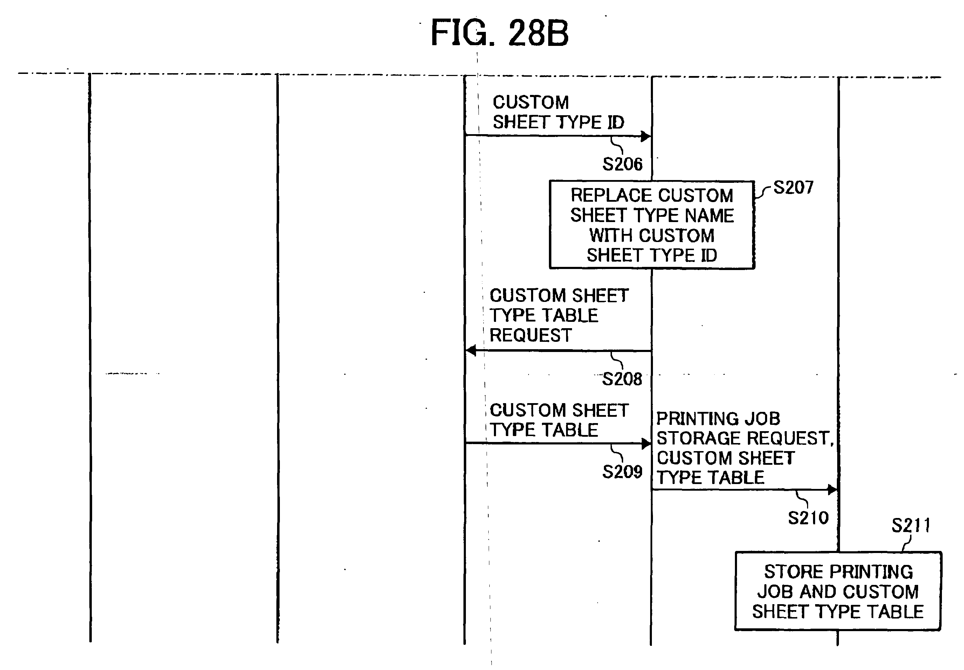

Referring to FIG 28, operation of processing a printing job storage request sent by the PC 10, performed by the printer 20, is explained according to an example embodiment of the present invention. In this example, the printing job request specifies a custom sheet type as a recording sheet type to be used for printing.

When the operation controller 14 of the PC 10 detects a user instruction for storing a printing job, the image data generator 15 of the PC 10 generates a printing job storage request including printing job information, such as information indicating the time when the storage job is requested, information regarding image data to be printed, information regarding the recording sheet type to be used for printing, etc., in a substantially similar manner as described above referring to FIG. 20A. The printing job storage request is sent to the printer 20 by the communication controller 12 through the network 40.

Referring to FIG 28, at S202, upon receiving the printing job storage request sent from the communication controller 12 of the PC 10 at S201, the communication controller 32 of the printer 20 sends the printing job storage request to the job manager 35.

At 5203, the job manager 35 analyzes the printing job storage request, and determines that the sheet type specified by the printing job storage request corresponds to the custom sheet type, using a custom sheet type name extracted from the printing job storage request, in a substantially similar manner as described above referring to S53 of FIG 20A.

At S204, the job manager 35 requests the device information manger 34 for the custom sheet type ID, by sending the custom sheet type name extracted from the printing job storage request.

Upon receiving the custom sheet type ID request, at S205, the device information manager 34 obtains the custom sheet type ID that corresponds to the extracted custom sheet type name from the custom sheet type table shown in FIG. 8. At S206, the device information manager 34 sends the custom sheet type ID to the job manager 35.

At S207, the job manager 35 replaces the custom sheet type name included in the printing job storage request with the custom sheet type ID.

At S208, the job manager 35 requests the device information manager 34 for a custom sheet type table.

At S209, the device information manager 34 sends the custom sheet type table to the job manager 35.

At S210, the job manager 35 sends the printing job storage request together with the custom sheet type table to the job storage 37. The printing job storage request includes the custom sheet type ID received from the device information manager 34.

At S211, the job storage 37 stores the printing job and the custom sheet type table in a desired memory, such as the HDD 201, and the operation ends.

The operation of FIG. 28 may be performed in various other ways. For example, the printing job storage request may be directly input by the user through the operation panel 26 or 105. In such case, the communication controller 12 may be replaced by the user, while the communication controller 32 may be replaced by the panel controller 33.

The operation of FIG. 28 describes the example case in which the recording sheet type specified by the printing job storage request corresponds to a custom sheet type. When the default sheet type is specified, a default sheet type code extracted from the printing job storage request may be converted to a default sheet type ID, for example, using the conversion table as described above referring to FIG 20B. Further, when the default sheet type is specified, the corresponding default sheet type table of FIG. 7 may not be stored since the default sheet type table of FIG. 7 remains unchanged.

Alternatively, when different sheet types are set respectively for a plurality of pages of image data to be printed, Steps S203 to S207 are repeated for all pages.

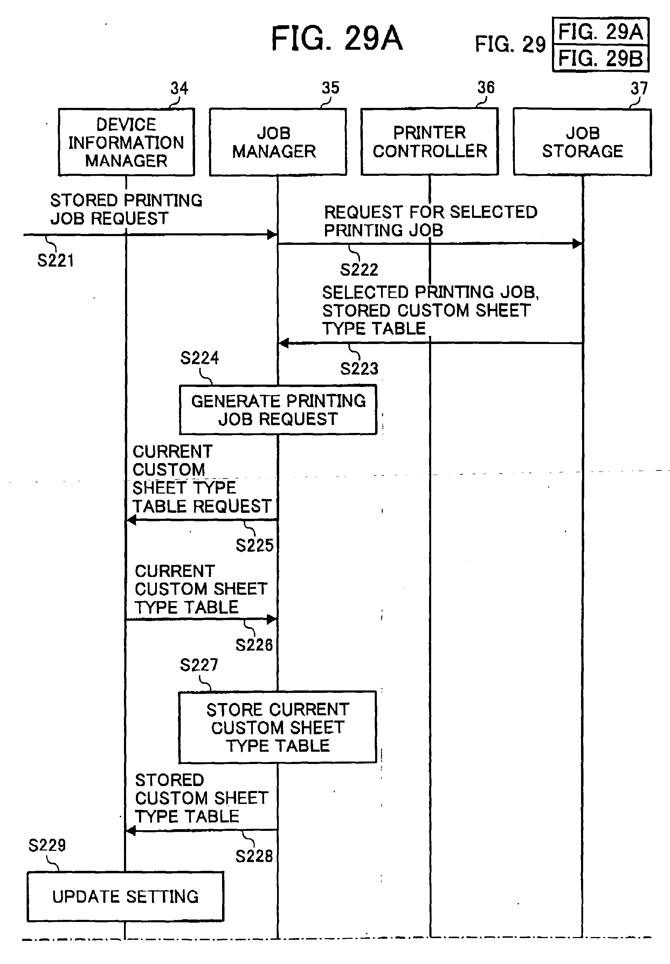

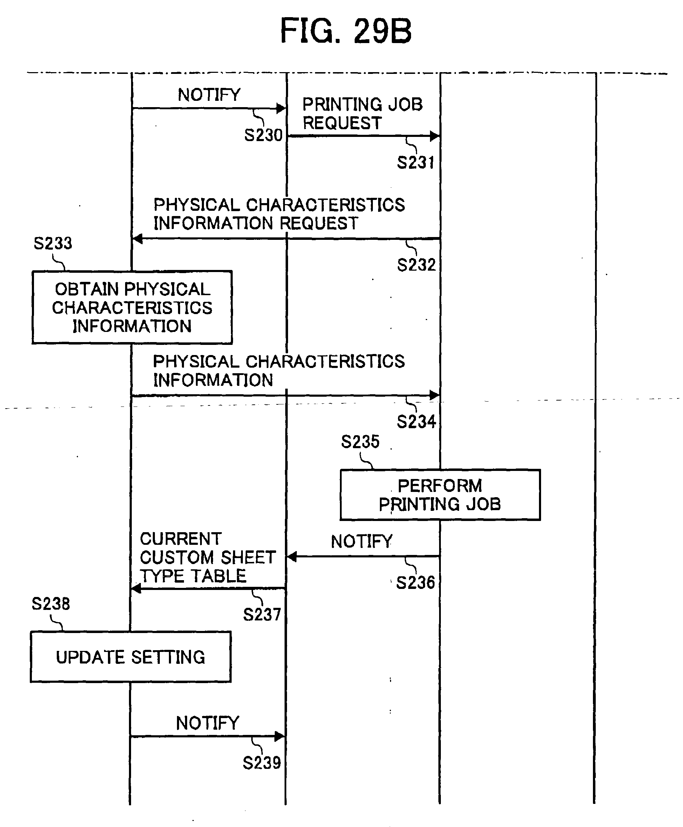

Referring now to FIG 29, operation of processing a stored printing job request, which requests the printer 20 to perform a printing job stored in the job storage 37, performed by the printer 20, is explained according to an example embodiment of the present invention. In this example, a recording sheet type specified by the printing job corresponds to a custom sheet type.

Once a printing job ("the selected printing job") stored in the job storage 37 is selected by the user to be printed, a stored printing job request may be generated by the PC 10 or the printer 20, which requests printing of the selected printing job. Upon receiving the stored printing job request from the communication controller 32 of the PC 10 or the panel controller 33 of the printer 20 at 5221, at S222, the job manager 35 requests for the job storage 37 for the selected printing job.

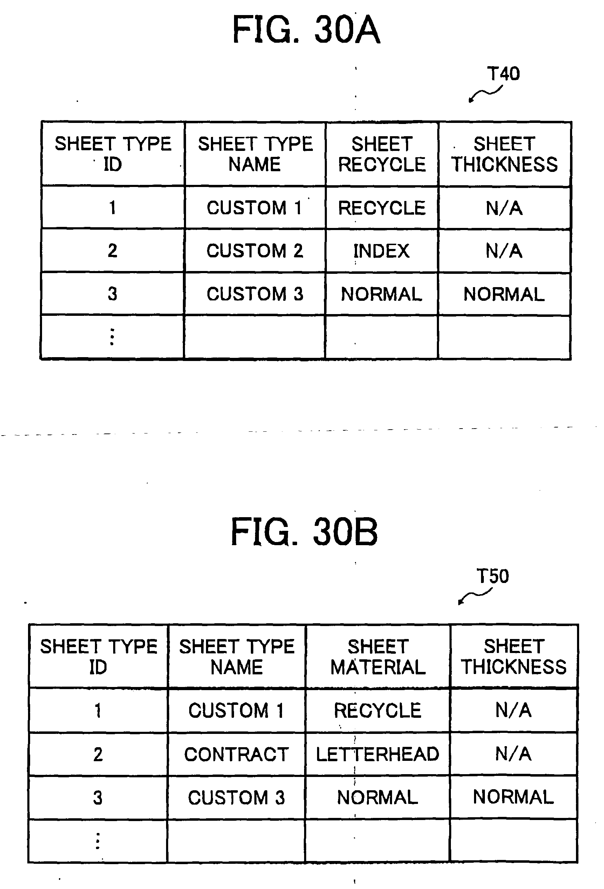

At S223, the job storage 37 obtains the selected printing job and a custom sheet type table, and sends them to the job manager 35. The custom sheet type table, which may be referred to as the stored custom sheet type table, is stored at the time in which the selected printing job is stored, in a corresponding manner with the selected printing job. For the descriptive purpose, in this example, the custom sheet type table T40 of FIG. 30A is obtained as the stored custom sheet type table.

At S224, the job manager 35 generates a printing job request, which requests printing of the selected printing job.

At S225, the job manager 35 requests the device information manager 34 for a custom sheet type table having the updated information, which may be referred to as the current custom sheet type table. For the descriptive purpose, in this example, the custom sheet type table T50 of FIG. 30B is obtained as the current custom sheet type table. At S226, the device information manager 34 sends the current custom sheet type table to the job manager 35. At S227, the job manager 35 stores the current custom sheet type table.

At S228, the job manager 35 sends the stored custom sheet type table, for example, the custom sheet type table T40, to the device information manager 34, and requests the device information manager 34 to update setting of the custom sheet type table.

At S229, the device information manager 34 updates setting of the custom sheet type table such that the stored custom sheet type table is set for use. At S230, the device information manager 34 notifies the job manager 35 that setting is completed.

When the job manager 35 determines that the printer 20 is ready for performing the printing job, the job manager 35 performs 5231 to S236 in a substantially similar manner as described above referring to S57 to S62 of FIG. 20A. However, in this example, at S233, the device information manager 34 refers to the stored custom sheet type table to obtain the physical characteristics information of the custom sheet type, instead of the current custom sheet type table.

For example, referring to FIGS. 30A and 30B, the contents of the stored custom sheet type table T40 may be different form the contents of the current custom sheet type table T50, since the custom sheet type table may be updated any time.

For example, when the stored printing job includes a custom sheet type ID 2 to be used for printing, the printer controller 36 prints the image data according to the printing control parameters suitable for a custom sheet type having the custom sheet type ID 2, by referring to the current custom sheet table T50. However, since the custom sheet type with the sheet type ID 2 stored in the current sheet type table T50 differs from the custom sheet type with the sheet type ID 2 stored in the stored sheet type table T40, the printing control parameters may not be correctly set at the time of printing. Similarly, one or more functions to be performed for image forming may not be correctly set at the time of printing, when the functions for the custom sheet type with the sheet type ID 2 are changed after storing the printing job. Similarly, authorized user information may not be correctly set at the time of printing, when the authorized user information for the custom sheet type with the sheet type ID 2 is changed after storing the printing job.

In order to suppress an error caused by mismatching between the current custom sheet type table and the stored custom sheet type table, the current custom sheet type table may be replaced with the stored custom sheet type table at the time of performing the stored printing job.

Once the job manager 35 is notified of completion of the printing job at S236, at S237, the job manager 35 sends the current custom sheet type table, which is stored at S227, to the device information manager 34, and requests the device information manager 34 to update setting of the custom sheet type table.

The device information manager 34 updates setting of the custom sheet type table at S238, and notifies the job manager 35 that setting is completed at S239.

The operation of FIG. 29 describes the example case in which the recording sheet type specified by the stored printing job request corresponds to a custom sheet type. When the default sheet type is specified, Steps corresponding to S221, S222, S223, S224, S231, S235, and S236 may be performed. Further, at S223, the job storage 37 does not provide any default sheet type table, since the default sheet type table remains unchanged.

Alternatively, when different sheet types are set respectively for a plurality of pages of image data to be printed, the selected steps of the operation shown in FIG 28 are performed depending on whether the custom sheet type or default sheet type is set for the corresponding page.

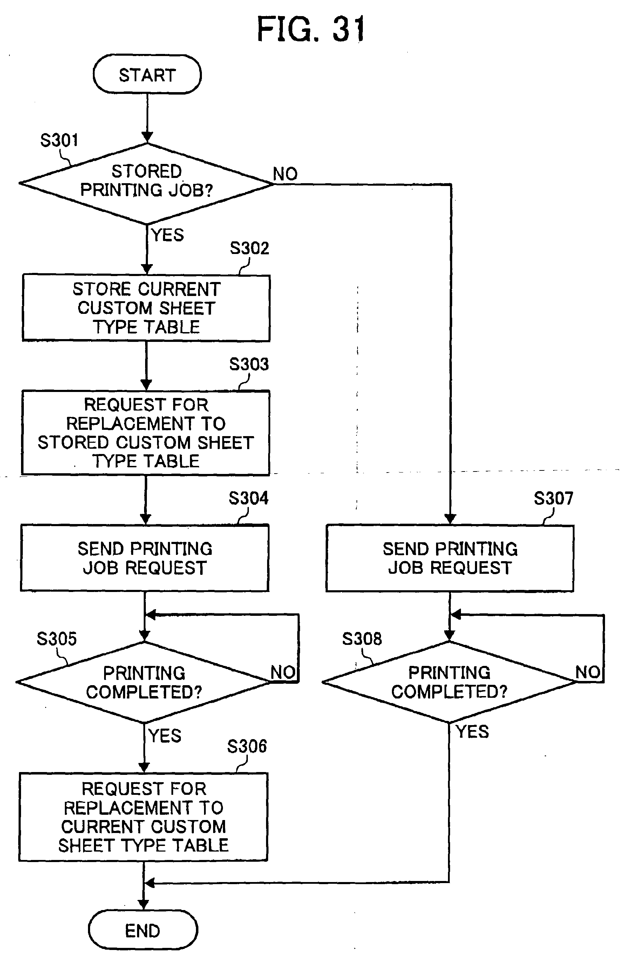

In this example, the printer 20 determines whether to perform the operation of FIG. 20A or 29, according to whether a requested printing job is current or stored, for example, as illustrated in FIG 31.

S301 determines whether a requested printing job corresponds to the stored printing job, which is stored in the job storage 37. When the requested printing job is stored ("YES" at S301), the operation proceeds to S302. When the requested printing job is not stored, i.e., the requested printing job is the current job ("NO" at S301), the operation proceeds to S307.

S302 copies and stores the current custom sheet type table, which may be obtained from the device information manager 34.

S303 requests the device information manager 34 to replace the current custom sheet type table with the stored custom sheet type table.

S304 sends the printing job request including a custom sheet type ID to a printer controller 36 to cause the printer controller 36 to perform the printing job.

S305 determines whether the printing job is completed. When it is determined that the printing job is completed ("YES" at S305), the operation proceeds to S306. When it is determined that the printing job is not completed ("NO" at S305), the operation repeats 5305.

S306 requests the device information manager 34 to replace the stored custom sheet table with the current custom sheet type table.

S307 sends the printing job request to the printer controller 36 to cause the printer controller 36 to perform the printing job. At this time, the current custom sheet type table is used.

S308 determines whether the printing job is completed. When it is determined that the printing job is completed ("YES" at S308), the operation ends. When it is determined that the printing job is not completed ("NO" at S308), the operation repeats S308.

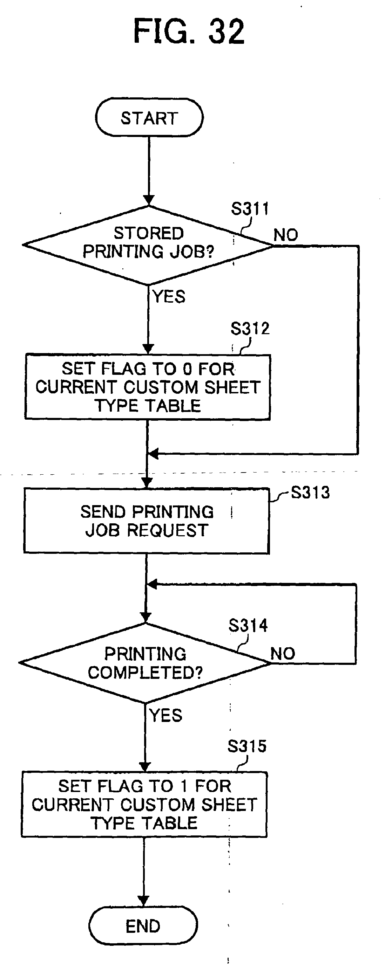

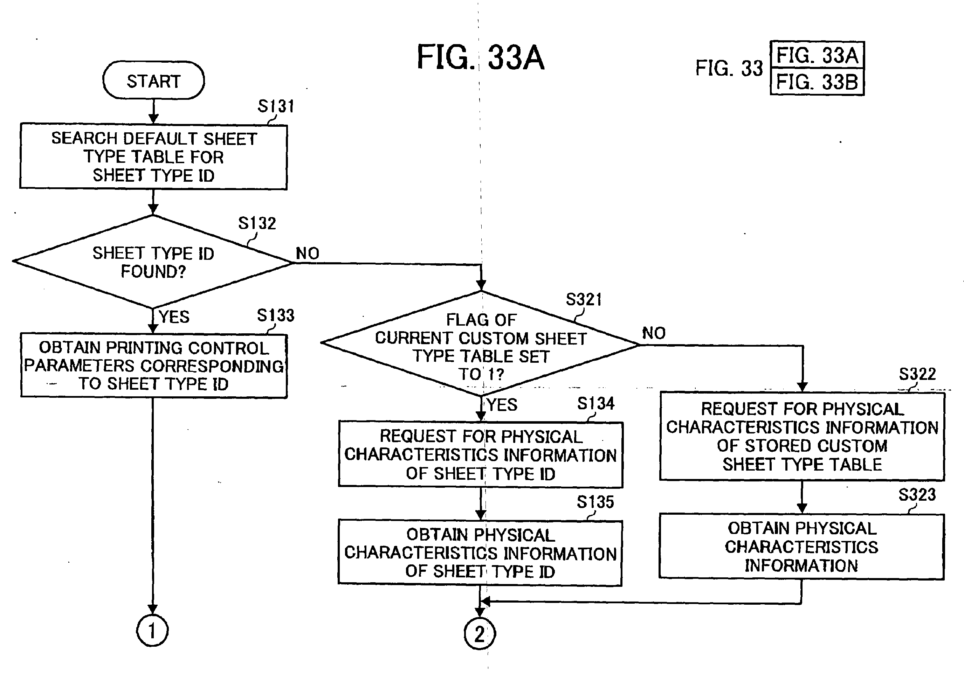

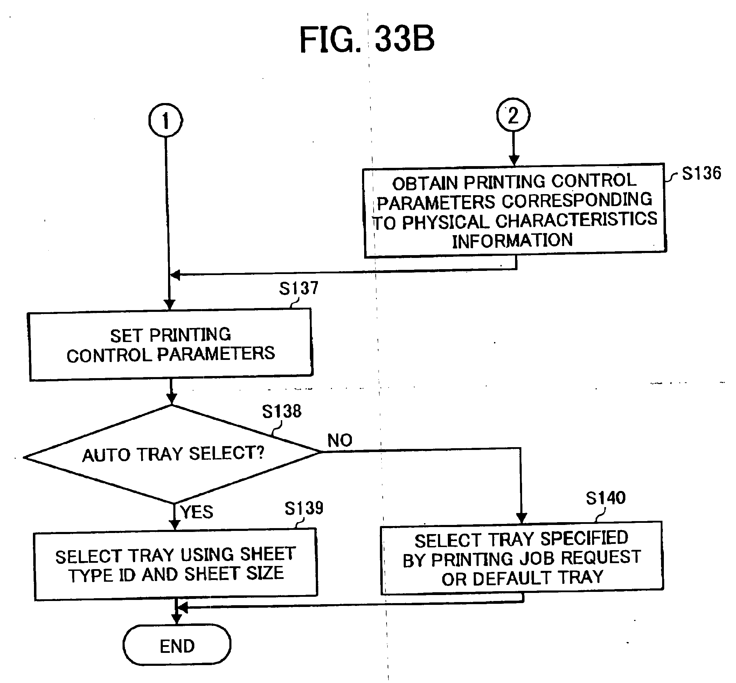

The above-described operation of replacing the custom sheet type table for use may be performed in various other ways. For example, as illustrated in FIGS. 32 and 33, the printer controller 36 may be informed of which one of the stored custom sheet type table and the current custom sheet type table should be used, for example, based on flag information. When the flag information indicates to use the stored custom sheet type table, the printer controller 36 refers to the stored custom sheet type table, which is managed by the job storage 37, when the stored printing job request is received. When the flag information indicates to use the current custom sheet type table, the printer controller 36 refers to the current sheet type table, which is managed by the device information manager 34, when the stored printing job request is received.

Referring to FIG. 32, operation of processing a job request, performed by the job manager 35, is explained according to an example embodiment of the present invention.

S311 determines whether the requested printing job corresponds to the stored printing job. When it is determined that the requested printing job corresponds to the stored printing job ("YES" at S311), the operation proceeds to S312. When it is determined that the requested printing job corresponds to the current job ("NO" at S311), the operation proceeds to S313.

S312 sets the value of flag information from 1 to 0 for the current custom sheet type table. In this example, the flag information "1" indicates that the corresponding custom sheet type table should be used. The flag information "0" indicates that the corresponding custom sheet type table should not be used.

S313 sends the printing job request including a custom sheet type ID to the printer controller 36.

S314 determines whether the printing job is completed. When the printing job is completed ("YES" at S314), the operation proceeds to S315. Otherwise ("NO" at S315), the operation repeats S314.

S315 sets the value of flag information from 0 to 1 for the current custom sheet type table, and the operation ends.

Referring to FIG. 33, operation of performing a printing job requested by the job manager 35 as described above referring to FIG 32, performed by the printer controller 36, is explained according to an example embodiment of the present invention. The operation of FIG. 33 is substantially similar to the operation of FIG. 24. The differences include the addition of S321, S322, and S323.

When the search result of S131 indicates that the sheet type ID corresponds to the custom sheet type ID, the operation proceeds to S321 to determine whether the value of flag information set for the current custom sheet type table has the "1" value. When the value of flag information is set to 1 ("YES" at S321), it is determined that the current custom sheet type table can be used, and the operation proceeds to S134. When the value of flag information is set to 0 ("NO" at S321), it is determined that the current custom sheet type table cannot be used, and the operation proceeds to S322.

S322 requests the job manager 35 for physical characteristics information, such as the sheet material or the sheet thickness, corresponding to the custom sheet type ID. At this time, the job manager 35 obtains the physical characteristics information of the custom sheet type ID from the stored sheet type table.

S323 receives the physical characteristics information that corresponds to the custom sheet type ID from the job manager 35.

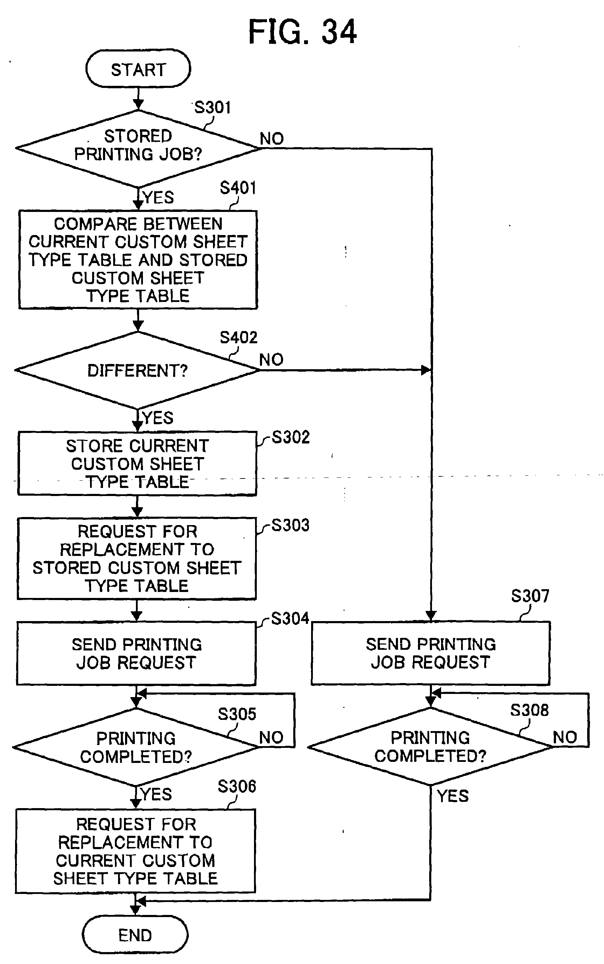

The operation of any one of FIGS. 31 to 33 may be performed in various other ways. For example, whether to replace the current custom sheet type table with the stored custom sheet type table may be determined based on the comparison between the current custom sheet type table and the stored custom sheet type table, for example, as illustrated in FIG. 34. The operation of FIG. 34 is substantially similar to the operation of FIG. 31. The differences include the addition of S401 and S402.

S401 compares between the current custom sheet type table and the stored custom sheet type table to generate a comparison result.

S402 determines whether the comparison result of S401 indicates that the current custom sheet type table is different from the stored custom sheet type table. When the comparison result indicates that the custom sheet type tables are different ("YES" at S402), the operation proceeds to S302 to replace the current custom sheet type table with the stored custom sheet type table. Otherwise ("NO" at S402), the operation proceeds to S307.

In this example, S401 of comparing does not have to be performed for the entire contents of the custom sheet type table. The custom sheet type tables may be compared only for one or more custom sheet type IDs included in the printing job information of the printing job request. Information regarding one or more custom sheet type IDs included in one or more printing jobs may be previously prepared as a table, which stores a plurality of custom sheet type IDs and selection information indicating whether the corresponding custom sheet type ID is selected for one or more printing jobs. The selection information may be expressed by the value of flag information. When the value of flag information has the "1" value, the custom sheet type is selected for the corresponding printing job. When the value of flag information has the "0" value, the custom sheet type is not selected for the corresponding printing job.

Alternatively, when S402 determines that the comparison result indicates that the custom sheet type tables are different ("YES" at S402), the printer 20 may interrupt the printing operation, and send notification to the user. For example, the printer 20 may request the user to select one of the options, including the option of canceling the printing operation, the option of continue printing using the stored custom sheet type table, the option of continue printing using the current custom sheet type table, and/or the option of resetting a recording sheet type to be used for printing by referring to the current custom sheet type table. According to the option selected by the user, the printer 20 may update information stored in the printing job, if necessary.

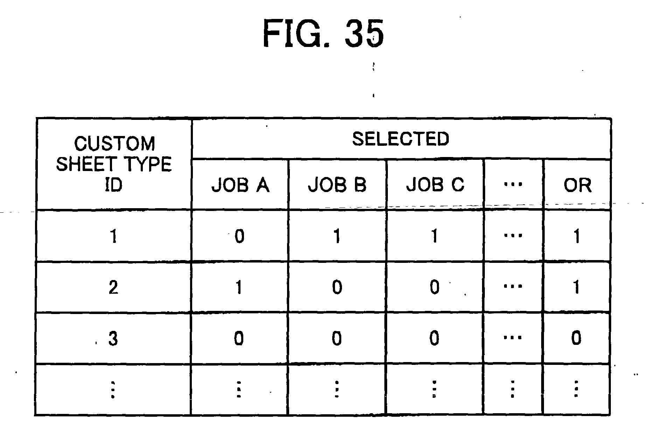

In order to suppress an error caused by mismatching between the current custom sheet type table and the stored custom sheet type table, a selected portion of the current custom sheet type table may be prohibited from being updated. For example, information indicating one or more custom sheet types that are selected for one or more printing jobs may be stored in the form of table, such as a selected sheet type table shown in FIG. 35. Referring to FIG. 35, when a custom sheet type having the custom sheet type ID 1 is selected for the printing job B, the value of flag information is set to 1 for the printing job B. When the custom sheet type having the custom sheet type ID 1 is not selected for the printing job A, the value of flag information is set to 0 for the printing job A. Further, the logical sum of the values of flag information of all printing jobs for the custom sheet type may be obtained, indicated by "OR" of FIG. 35, to indicate whether the custom sheet type is selected for any printing job.

For example, when updating of the custom sheet type table is requested by the user, the device information manager 34 refers to the selected sheet type table of FIG 35, and determines whether the custom sheet type requested for updating has the flag value of 1 for at least one of the printing jobs. If the custom sheet type requested for updating has the flag value of 1, the printer 20 notifies the user that updating is prohibited. If the custom sheet type requested for updating has the flog value of 0, the printer 20 accepts the updating operation.

In addition to or in alternative to the above-described use of the information regarding the custom sheet types, the information regarding the custom sheet types, which is stored in the custom sheet type table, may be used to suppress a human-caused error, which may be generated at the time of inputting printing setting information.

For example, the user may input printing setting information, which is not avilable for use by the printer 20 or not adequate for the corresponding custom sheet type. For example, the user may accidentally select the duplex copying function using the printing setting screen 70 of FIG. 14, even though the duplex copying function is not selected for the corresponding custom sheet type at the time of registering. In such case, upon receiving the printing job request, the job manager 35 may determine whether the function specified by the printing job matches the function specified by the custom sheet type table. When the function does not match the function specified by the custom sheet type table, the job manager 35 causes the communication controller 32 to send an error message. At this time, one or more options may be presented to the user, including the option of canceling, the option of inputting the printing setting information again, and/or the option of using the default setting obtainable from the custom sheet type table.

Alternatively, the information regarding the custom sheet types, which is stored in the custom sheet type table, may be used to improve the security.

For example, the user may prevent the other from using a specific custom sheet type. When the user restriction is selected, the job manager 35 may determine whether the user currently logged on is authorized to use the corresponding custom sheet type, by referring to the authorized user table of FIG 9. When the current user is not found in the authorized user table, the job manager 35 causes the communication controller 32 to send an error message indicating that the selected custom sheet type cannot be used.

Numerous additional modifications and variations are possible in light of the above teachings. It is therefore to be understood that within the scope of the appended claims, the disclosure of this patent specification may be practiced in ways other than those specifically described herein.

For example, elements and/or features of different illustrative embodiments may be combined with each other and/or substituted for each other within the scope of this disclosure and appended claims.

In another example, in order to specify the default sheet type, for example, when generating a printing job request, the corresponding default sheet type ID may be used instead of using the default sheet type code.

Further, in this specification, the printer 20 of FIG. 1 is described as an example. Any desired image forming apparatus such as a copier, facsimile, multifunctional apparatus (MFP) having a plurality of image forming functions, may be used. Similarly, the PC 10 of FIG 1 may be substituted by any desired information processing apparatus.

Further, as described above, any one of the above-described and other methods of the present invention may be embodied in the sheet of a computer program stored in any kind of storage medium. Examples of storage mediums include, but are not limited to, flexible disk, hard disk, optical discs such as CD-ROM, magneto-optical discs, magnetic tapes, involatile memory such as SRAM, EEPROM, or involatile memory cards, ROM (read-only-memory), etc.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

This patent application is based on and claims priority to Japanese patent application Nos. 2006-134103 filed on May 12, 2006, 2006-166927 filed on June 16, 2006, and 2007-048348 filed on February 28, 2007 in the Japanese Patent Office, the entire contents of which are hereby incorporated by reference.

## Claims

1. An image forming apparatus, comprising:
a device information manager to manage a custom sheet type table storing a custom sheet type identification number, a custom sheet type name, and custom sheet type information in a corresponding manner for a custom sheet type registered by a user, the custom sheet type name and the custom sheet type information being input or selected by the user; and
a user interface controller to output the custom sheet type name of the custom sheet type for display to the user upon receiving a sheet type name request from the user.

2. The apparatus of claim 1, wherein the device information manager is further configured to manage a default sheet type table storing a default sheet type identification number and default sheet type information in a corresponding manner for a default sheet type previously set by default.

3. The apparatus of claim 1 or 2, wherein the user interface controller further receives a printing job request that requests the image forming apparatus to perform a printing job, the printing job request comprising identification information of a selected sheet type selected by the user for processing the printing job, the apparatus further comprising:
a job manager to convert the identification information of the selected sheet type to a sheet type identification number using a selected one of the custom sheet type table and the default sheet type table, and rewrite the printing job request by replacing the identification information with the sheet type identification number; and
a printer controller to perform the printing job, using information obtained from the selected one of the custom sheet type table and the default sheet type table in a corresponding manner with the sheet type identification number.

4. The apparatus of claim 1 or 2, wherein the user interface controller is further configured to receive a printing job storage request that requests the image forming apparatus to store a printing job, the printing job storage request comprising identification information of a selected sheet type selected by the user for processing the printing job, the apparatus further comprising:
a job manager configured to convert the identification information of the selected sheet type to a sheet type identification number using a selected one of the custom sheet type table and the default sheet type table, and rewrite the printing job storage request by replacing the identification information with the sheet type identification number; and
a job storage configured to store the printing job having the sheet type identification number as a stored printing job.

5. The apparatus of claim 4, wherein when the identification information of the selected sheet type corresponds to the custom sheet type name, the job storage is further configured to store the custom sheet type table obtained when the printing job storage request is received as a stored custom sheet type table, in a corresponding manner with the stored printing job.

6. The apparatus of claim 5, wherein when the user interface controller receives a printing job request that requests the image forming apparatus to perform a printing job, the job manager is further configured to determine whether the printing job requested by the printing job request corresponds to the stored printing job to generate a determination result, the apparatus further comprising:
a printer controller to perform the printing job using information obtained from the stored custom sheet type table when the determination result indicates that the printing job corresponds to the stored printing job.

7. The apparatus of claim 5, wherein when the user interface controller receives a printing job request that requests the image forming apparatus to perform a printing job, the job manager is further configured to compare between the custom sheet type table obtained when the printing job request is received and the stored custom sheet type table to generate a comparison result, the apparatus further comprising:
a printer controller to perform the printing job using information obtained from the stored custom sheet type table when the comparison result indicates that the custom sheet type table obtained when the printing job request is received is different from the stored custom sheet type table.

8. The apparatus of claim 5, wherein when the user interface controller receives a printing job request that requests the image forming apparatus to perform a printing job, the job manager is further configured to compare between the custom sheet type table obtained when the printing job request is received and the stored custom sheet type table to generate a comparison result, and interrupt processing of the printing job request when the comparison result indicates that the custom sheet type table obtained when the printing job request is received is different from the stored custom sheet type table.

9. The apparatus of claim 4 or 5, wherein when the user interface controller receives a registration start request that requests updating of the custom sheet type table, the device information manager is further configured to determine whether the custom sheet type table requested for updating can be updated based on a sheet type selection table storing the stored printing job and the sheet type identification number included in the printing job storage request in a corresponding manner to generate a determination result, and wherein the user interface controller is further configured to send an error message when the determination result indicates that the custom sheet type table requested for updating is prohibited from being updated.

10. An information processing apparatus configured to connect with an image forming apparatus via a network, the information processing apparatus comprising:
a communication controller configured to send a sheet type name request to the image forming apparatus and receive identification information of a recording sheet type avilable for use by the image forming apparatus in response to the sheet type name request;
a storage device; and
a controller configured to determine whether the identification information is stored in the storage device to generate a determination result, and set the identification information for display when the determination result indicates that the identification information is not stored in the storage device.

11. The apparatus of claim 10, wherein the determination result is generated based on whether additional data is added to the identification information.

12. A system for managing a recording sheet type including a custom sheet type, the system comprising the image forming apparatus of any one of claims 1 to 9 and the information processing apparatus of any one of claims 10 and 11.

13. A method for managing information regarding a recording sheet type, the method comprising:
inputting a custom sheet type name and custom sheet type information in a corresponding manner for a custom sheet type having a custom sheet type identification number previously assigned;
storing the custom sheet type name and the custom sheet type information in a corresponding manner with the custom sheet type identification number in the form of a custom sheet type table, in addition to a default sheet type table storing a default sheet type identification number and default sheet type information in a corresponding manner for a default sheet type; and
outputting the custom sheet type name in response to a sheet type name request received from a user.

14. The method of claim 13, further comprising:
receiving a printing job request that requests for performing a printing job, the printing job request comprising identification information of a selected sheet type selected by the user for processing the printing job;
converting the identification information of the selected sheet type to a sheet type identification number using a selected one of the custom sheet type table and the default sheet type table;
rewriting the printing job request by replacing the identification information with the sheet type identification number; and
performing the printing job, using information obtained from the selected one of the custom sheet type table and the default sheet type table in a corresponding manner with the sheet type identification number.

15. The method of claim 13, further comprising:
receiving a printing job storage request that requests for storing a printing job, the printing job storage request comprising identification information of a selected sheet type selected by the user for processing the printing job;
converting the identification information of the selected sheet type to a sheet type identification number using a selected one of the custom sheet type table and the default sheet type table;
rewriting the printing job storage request by replacing the identification information with the sheet type identification number; and
storing the printing job as a stored printing job.

16. The method of claim 15, further comprising:
storing the custom sheet type table obtained when the printing job storage request is received as a stored custom sheet type table, in a corresponding manner with the stored printing job, when the identification information of the selected sheet type corresponds to the custom sheet type name.

17. The method of claim 15, further comprising:
receiving a printing job request that requests for performing a printing job;
determining whether the printing job requested by the printing job request corresponds to the stored printing job to generate a determination result;
performing the printing job using information obtained from the stored custom sheet type table when the determination result indicates that the printing job corresponds to the stored printing job.

18. A computer readable medium storing computer instructions for performing the method of any one of claims 13 to 17.
